# EUROPEAN PATENT SPECIFICATION

(11) **EP 3 594 079 B1**
(45) Date of publication and mention of the grant of the patent: **29.06.2022**
(21) Application number: 18756952.0
(22) Date of filing: 22.02.2018
(51) Int. Cl.: B61B 3/02, E01B 25/26

(54) **PERSONAL HANGING TYPE DOUBLE-RAIL AND DOUBLE-POWER AUTOMATIC CONTROL LIGHT RAIL TRAFFIC SYSTEM**
HÄNGENDES DOPPELSCHIENEN- UND DOPPELENERGIE-LICHTSCHIENENVERKEHRSSYSTEM MIT AUTOMATISCHER STEUERUNG ZUR PERSONENBEFÖRDERUNG
SYSTÈME DE TRAFIC DE TRAIN LÉGER SUR RAIL À COMMANDE AUTOMATIQUE À DOUBLE RAIL ET DOUBLE PUISSANCE DE TYPE SUSPENDU PERSONNEL

(30) Priority: 23.02.2017 CN 201710098937
(43) Date of publication of application: 15.01.2020
(73) Proprietor: Wan, Puhua, Hefei, Anhui 230031 (CN)
(72) Inventor: WAN, Zepei, Anhui 230011 (CN); WAN, Puhua, Hefei, Anhui 230031 (CN)
(74) Representative: Cabinet Chaillot
(86) International application number: PCT/CN2018/076936
(87) International publication number: WO 2018/153339

(56) References cited:
- CN-A- 1 511 095
- CN-A- 1 775 602
- CN-A- 101 134 464
- CN-A- 102 211 584
- CN-A- 105 774 820
- CN-A- 106 864 464
- CN-U- 201 980 227
- CN-U- 202 987 140
- US-A- 3 830 163
- US-A1- 2005 111 012

## Description

### Technical Field

The present invention relates to rail type traffic system, particular to a personal hanging type double-rail and double-power automatic control light rail traffic system. In the present invention, an electric rail vehicle hanging on a light type rail arranged in midair is controlled by computer to run automatically for point-to-point transportation of people and goods.

### Background Art

At present, the rail type vehicles commonly used mainly belong to ground rail traffic system, underground rail traffic system and rail traffic system of elevated light rail. Though these rail-type vehicles are large in carryings, fast in speed, safe and reliable, there are widespread shortcomings such as large investment scale, long construction period, long station spacing, and large occupation of urban space resources. Due to these limitations, the rail-type vehicles could only be used for interurban and intra-urban arterial traffic at present. In 1950s, the concept of PRT, a traffic system where small vehicles run automatically on the special rail network or special road network, and the concept of light type rail and personal rail vehicles applied in urban branch line traffic were first put forward by Americans. However both the technical proposal of hanging type signal rail vehicle steering published in the US patent of No.4016818 or 3 830 163 A and PCT patent of No.WO03047903, and the proposal of personal rail traffic in the CN patent of Professor HU YINGPING entitled Autonomously Steering Suspended Single-Track Vehicle of No. CN2005100076552 fail to provide a fast, reliable, simple and reasonable solution for the steering, merging, shunting, stopping at stations and system control of the personal rail vehicle. As a result, the PRT concept has not been applied in practice at home or abroad for nearly 70 years.

### Summary of the Invention

The purpose of present invention is to disclose a personal hanging type double-rail and double-power automatic control light rail traffic system for solving the problem that the existing rail vehicles could only run on a traffic artery instead of a normal branch line. And the present invention could be applied to the internal urban traffic like main and secondary roads, small streets and lanes, the traffic between cities and villages, the interurban traffic, the internal traffic of large venues, as well as the traffic inside of large factories and mines, schools, airports, parks and scenic spots.

The technical solutions in the present invention are as follows:
A personal hanging type double-rail and double-power automatic control light rail traffic system, comprises a track system, a rail vehicle power system, a rail vehicle traffic network control system, a rail vehicle compartment system, a rail vehicle power supply system, and a rail vehicle stop station system;

The track system comprises a track support system and a track(8), the track support system comprises a vertical support column(3) and a horizontal support truss(2), a rail vehicle(1) runs along the track(8), the track(8) comprises a left side straight rail(29) and a right side turning rail(28), the track(8) is installed in the inner cavity of the horizontal support truss (2), the left side straight rail (29), installed on the left side of the cavity, is a mainline rail arranged continuously; the right side turning rail (28), installed on the right side of the cavity, comprises a straight section and a turn section, the straight section thereof is set to be parallel to the left side straight rail (29) with spacing reserved, the top face level of the straight section thereof is higher than that of the left side straight rail (29), the top face level thereof gradually rises while transiting to the turn section from the straight section, the top height difference between the turning and the left side straight rail (29) enables the left side equipment platform (16) of the rail vehicle (1)to deviate from the left side straight rail (29), the right side turning rail (28) curves at the highest point with gradually increasing distance from the left side straight rail (29), and the right side turning rail (28) diverts to the stop station so that the rail vehicle could pull in and stop in the station, or connects to another right side turning rail(28)which is on an intersected or parallel rail line so that the rail vehicle(1) could make a turn, a merging or a shunting;

The rail vehicle power system comprises a compartment boom (20), a rail vehicle power platform (27) and an eccentric support wheel (19), the rail vehicle power platform(27) comprises a left side equipment platform(16) and a right side equipment platform(17), the left side equipment platform (16) is provided with a front left drive wheel (11) and a rear left driven wheel (13), the right side equipment platform (17) is provided with a front right drive wheel (12), a rear right driven wheel (14) and a lifting device for right side equipment platform (18), the lower end of the carriage boom (20) is provided with an eccentric support wheel (19), and the roll surface of the eccentric support wheel (19) is in contact with the bottom side of the track(8); the compartment boom(20) is flexible connected to the top of the rail vehicle compartment(4) through a turn plate, when the rail vehicle (1) makes a small radius turn, a rotation will be generated between the compartment boom (20) and the rail vehicle compartment (4), the left side equipment platform (16) is installed above the left side straight rail (29), the right side equipment platform (17) is installed above the right side turning rail (28), and the right side equipment platform (17) reciprocates up and down relative to the left side equipment platform (16) through the lifting device for right side equipment platform (18); when the rail vehicle(1) runs straight, due to the left side equipment platform (16) is above the left side straight rail(29), the front left drive wheel (11) and the rear left driven wheel (13) drive the rail vehicle (1)to run straight ahead along the left side straight rail(29), when the rail vehicle(1) needs to turn into the station, to merge, to divert, or to urgently deviate from the left side straight rail(29) due to malfunctions, the entire right side equipment platform (17) moves downward to contact the right side turning rail(28) under the action of the lifting device for right side equipment platform (18), and at the same time the front right drive wheel (12) is started to power the rail vehicle (1), when the rail vehicle(1) gets to the turn section along the straight section of the right side turning rail(28), the top face level thereof gradually rises above that of the left side straight rail(29), and the entire rail vehicle power platform(27) is lifted with the rising level of the right side turning rail (28) so that the left side equipment platform(16) deviates from the left side straight rail(29), then the rail vehicle(1) enters into the turn section on the right side turning rail(28) and turns along the curve to deviate from the left side straight rail(29) thereby realizing the turning of the rail vehicle(1), on the contrary, when the turn section is merged into the straight section, the level of the right side turning rail(28) gradually decreases, and the distance between right side turning rail (28) and left side straight rail (29) are gradually closer, when the straight section on the right side turning rail (28)is arrived, the left side equipment platform (16)contacts the left side straight rail(29), the front left drive wheel(11) on the left side equipment platform(16) is started and the front right drive wheel(12) on the right side equipment platform(17) is closed, under the action of the lifting device for right side equipment platform(18), the right side equipment platform(17) is lifted and deviated from the right side turning rail(28), and the rail vehicle enters into the state of running straight;

The rail vehicle traffic network control system comprises a central control computer system, an on-board computer control system, a rail signal identification device, and a stop station computer control system, the central control computer system comprises a large central control computer and an auxiliary system thereof, the central control computer collects reservation and destination information of each rail vehicle (1), stop station information, and malfunction information of the track(8) and the rail vehicle (1) for data computing, and implements automatic control over the overall scheduling, operation line design and emergency disposal of malfunctions for the rail vehicle(1), the on-board computer control system comprises an on-board computer, a rail vehicle signal transmitting and receiving device(30), a computer controlled compartment latch(6) and data lines, the on-board computer stores the control procedures for the rail vehicle(1) in various states, when obtaining the target information set by the user on the computer controlled compartment latch (6), the on-board computer uploads the target information to the central control computer, the central control computer calculates the optimal operation line of the rail vehicle (1) and sends the optimal operation line of rail vehicle back to the on-board computer, the on-board computer calculates and processes the signal data collected by the signal transmitting and receiving device (30) to obtain the operation command of the rail vehicle (1), and the on-board computer controls the rail vehicle (1) to accelerate, decelerate and brake by adjusting the input current and voltage of the rail vehicle power platform (27), opening and closing the brake components (15), and enables the rail vehicle(1) to make a turn, a merging or a shunting by starting the lifting device for right side equipment platform (18).

the rail vehicle compartment system comprises a rail vehicle compartment(4), a seat (9), a foldable worktop(10) and a door(5), the rail vehicle compartment(4) is connected with the rail vehicle power platform(27) through two compartment booms(20) on the front and rear, and inside the rail vehicle compartment(4) is provided a computer controlled compartment latch(6), a compartment video monitoring device, an air condition, lightings, a rail vehicle weight limit device, network, a radio equipment, an emergency calling device and a manual control button.

The rail vehicle power supply system comprises transformer substations arranged along the rail, power transmission lines, a rail vehicle internal power supply system, and a contact wire network of the rail internal power supply(22), the rail vehicle inner power supply system comprises a power receiving contact (23), a rail vehicle distribution box (24), a battery emergency power supply (21), a power platform power supply line, a compartment power supply line, and a weak current system, along the track(8)is arranged transfer substations, each transfer substation is supplied by uninterruptible power from no less than two city power circuits, the transmission line is arranged along the inside of the horizontal support truss (2) to supply power for the power supply contact wire network (22), the internal power supply system of the rail vehicle (1) connects the power supply through the power receiving contact (23) and supplies power for battery emergency power supply (21), rail vehicle power platform (27), rail vehicle compartment (4), and weak current system through the distribution box (24), and the battery emergency power supply (21) is installed on the left side equipment platform (16) of the rail vehicle power platform (27).

Both outer sides of the front left drive wheel (11) and the front right drive wheel (12) are provided with a brake component (15), and the lifting device for right side equipment platform (18) adopts mechanical, electromagnetic or hydraulic mode as the drive power.

The track (8) adopts an inverted L-shaped structure, and the track (8) comprises an inverted L-shaped rail steel plate (25) and a rail support member (26).

The rail vehicle power platform(27) connects the rail vehicle compartment (4) through two compartment booms (20)on the front and rear, both two compartment booms(20) on the front and rear are provided with an eccentric support wheel (19), and the roll surfaces of eccentric support wheels on the front and rear compartment booms(20) are respectively in contact with the left and right sides of the bottom of the track(8) to resist the eccentric moment generated between the compartment booms(20) and the two sides of track(8).

The track(8) is provided with a signal device at the merging point, the appropriate point of the straight rail is provided with a signal receiving and transmitting device of merging signal, when the vehicle passes the merging signal device, the vehicle passing signal is transmitted to the signal receiving and transmitting device of merging signal, and when the running straight rail vehicle passes and obtains the signal that a rail vehicle is merging into the rail, the signal is calculated by the on-board computer thereof to determine whether to accelerate or decelerate so as to yield to the rail vehicle which is merging into the rail.

The rail vehicle(1) running on a track B which is parallel to a track A and a track C, could shunt from the track B onto the track A on the left or onto the track C on the right through a shunting device, the shunting device is a right side turning rail, and the right side turning rail, manufactured into a curve shape, could be connected to the right side turning rail of the track A by bypassing the track B to the left or be connected to the right side turning rail of the track C by bypassing the track C to the right.

The stop station system comprises a hardstand area, a stop station track, a drop-off platform, a pick-up platform, a rail vehicle maintenance platform and a stop station control center, the hardstand area comprises the vacant lot arranged on both sides of the rail line, a basement, and an inner space of a large space building, the stop station track comprises a right side turning rail(28) and at least a left side straight rail(29), the right side turning rail(28) drawn from the turning of the track(8) within the track system, gradually decreases in the height till lower than the bottom of the rail vehicle (1) and just higher than the ground of the stop station, the right side turning rail(28) in stop station curves along the outside of the hardstand area to form an outwardly protruding arc and gradually rises in height after departing from the station to merge into the track(8)within the track system, a left side straight rail(29) of the stop station is arranged inside of the arc, a parallel segment (31) connected with the right side turning rail (28) at both ends of the left side straight rail (29) is provided for rail vehicle (1) to merge into the left side straight rail (29) from the right side turning rail(28) when entering the station, and to shunt from left side straight rail (29) onto the right side turning rail(28) when departing from the station, the left side straight rail (29) of the stop station is used for the rail vehicle (1) to pick up and drop off passengers, the entrance thereof is set as the drop-off platform, the exit thereof is set as the pick-up platform, and the arc top of the right side turning rail (28) of the stop station is set as the maintenance platform of rail vehicle (1).

The stop station system could be divided into a manned and an unattended stop station or an open and an indoor stop station.

In the present invention, The track system is provided with two rail lines (28, 29), which are a left side straight rail line and a right side turning rail line that are in parallel but are different in top face level, and the two power systems of a left side straight rail drive device and a right side turning rail drive device are separately disposed above the two rails. A relative distance between the turning rail drive device and the turning rail is changed by using a lifting device, and meanwhile, under the effect of a change of the relative level between the straight rail and the turning rail, switching of a rail vehicle between the left side straight rail and the right side turning rail is implemented, thereby the steering, merging, shunting, stopping at stations of the personal rail vehicle are achieved in a safe, simple and fast way. And a central computer control system is used in cooperation in the system to achieve automation control and autonomous circumambulation of rail vehicle so that the PRT concept is truly transformed into an application technology that serves people's lives.

### Description of the Figures

Fig.1 is a schematic diagram showing the track support system.
Fig. 2 is a schematic diagram showing the layout of rail vehicle on urban roads.
Fig. 3 is a schematic diagram showing the appearance of rail vehicle.
Fig. 4 is a schematic diagram showing the internal structure of the rail vehicle.
Fig. 5 is a main view of the rail vehicle power system.
Fig.6 is a top view of the rail vehicle power system.
Fig.7 is a lateral view of the rail vehicle power system.
Fig.8 is a main view that the rail vehicle power system runs on the rail.
Fig.9 is a top view that the rail vehicle power system runs on the rail.
Fig.10 is a lateral view that the rail vehicle power system runs on the rail.
Fig.11 is a top view that the rail vehicle makes a merging.
Fig.12 is a lateral view that the rail vehicle makes a merging.
Fig.13 is a top view that the rail vehicle makes a turn.
Fig.14 is a lateral view that the rail vehicle makes a turn.
Fig.15 is a top view that the rail vehicle makes a shunting.
Fig.16 is a lateral view that the rail vehicle makes a shunting.
Fig. 17 is a schematic diagram showing a rail vehicle stop station.
Fig. 18 shows cutaway views at five positions when the rail vehicle in Fig.11 makes a merging.
Fig. 19 shows cutaway views at five positions when the rail vehicle in Fig.15 makes a turn.
Fig.20 shows cutaway views at four positions when the rail vehicle in Fig.11 makes a shunting.

### Specific Embodiments

Referred to the attached figures, a personal hanging type double-rail and double-power automatic control light rail traffic system, comprises a track system, a rail vehicle power system, a rail vehicle traffic network control system, a rail vehicle compartment system, a rail vehicle power supply system, and a rail vehicle stop station system.

The track system comprises a track support system and a track(8), the track support system comprises a vertical support column(3) and a horizontal support truss(2), a rail vehicle(1) runs along the track(8), the track(8) comprises a left side straight rail(29) and a right side turning rail(28), the track(8) is installed in the inner cavity of the horizontal support truss (2), the left side straight rail (29), installed on the left side of the cavity, is a mainline rail arranged continuously; the right side turning rail (28), installed on the right side of the cavity, comprises a straight section and a turn section, the straight section thereof is set to be parallel to the left side straight rail (29) with spacing reserved, the top face level of the straight section thereof is higher than that of the left side straight rail (29), the top face level thereof gradually rises while transiting to the turn section from the straight section, the top height difference between the turning and the left side straight rail (29) enables the left side equipment platform (16) of the rail vehicle (1)to deviate from the left side straight rail (29), the right side turning rail (28) curves at the highest point with gradually increasing distance from the left side straight rail (29), and the right side turning rail (28) diverts to the stop station so that the rail vehicle could pull in and stop in the station, or connects to another right side turning rail(28)which is on an intersected or parallel rail line so that the rail vehicle(1) could make a turn, a merging or a shunting.

The track (8) adopts an inverted L-shaped structure, and the track (8) comprises an inverted L-shaped rail steel plate (25) and a rail support member (26).

The spacing, height and structural form of the vertical support column(3) and horizontal support truss(2) of the rail are designed and determined according to the existing topography and buildings of the setting area of the track system. While designing the rail vehicle (1), following means are adopted to strictly control the load of the rail: 1. the light-weight design is applied to the rail vehicle for controlling the weight of rail vehicle compartment (4) and rail vehicle power platform (27); 2.the load of the rail vehicle is limited through a weight limit device on the compartment boom (20) of the rail vehicle; 3.the distance for a rail vehicle (1) to run on the track(8) is automatically controlled through a distance measuring equipment installed on the front part of rail vehicle so that the number of the rail vehicle(1) runs on the track(8) of unit distance is controlled. Through means above, the load of the rail horizontal support truss is effectively controlled within the minimum range and the size of support member could be the smallest, the horizontal support truss (2) of single rail line could be more than 100 meters, and the track(8), the horizontal support truss (2) and the rail vehicle (1) only occupy an air passage with a width of no more than 2 meters, a height of no more than 3 meters and a distance of 5 to 15 meters from the ground. Therefore the layout of horizontal support truss (2) could be flexible and changeable, and could overcome various obstacles such as urban roads, bridges, small buildings and trees. The traffic rail lines inside the urban could be arranged above the green belts of the main roads, the slow lanes, the roadside green belts or, the green space in the parks, or under the viaducts or between the residential buildings. The traffic rail lines between the urban and rural could be arranged on both sides of the existing roads, or above the farmlands, woods or hills; the inter-city traffic lines could be arranged on both sides of ordinary existing highways and expressways between cities, and the existing tunnels could help the vehicle to cross mountains and highlands. The internal traffic lines of large factories, mines, schools, airports, parks, and scenic spots could be arranged on both sides of the existing roads or arbitrarily above the open space within the areas. And the rail lines inside the large stadium buildings could be designed specifically when the buildings are designed.

The rail vehicle power system comprises a compartment boom (20), a rail vehicle power platform (27) and an eccentric support wheel (19), the rail vehicle power platform(27) comprises a left side equipment the right side equipment platform (17) is provided with a front right drive wheel (12), a rear right driven wheel (14) and a lifting device for right side equipment platform (18), the lower end of the carriage boom (20) is provided with an eccentric support wheel (19), and the roll surface of the eccentric support wheel (19) is in contact with the bottom side of the track(8); the compartment boom(20) is flexible connected to the top of the rail vehicle compartment(4) through a turn plate, when the rail vehicle (1) makes a small radius turn, a rotation will be generated between the compartment boom (20) and the rail vehicle compartment (4), the left side equipment platform (16) is installed above the left side straight rail (29), the right side equipment platform (17) is installed above the right side turning rail (28), and the right side equipment platform (17) reciprocates up and down relative to the left side equipment platform (16) through the lifting device for right side equipment platform (18); when the rail vehicle(1) runs straight, due to the left side equipment platform (16) is above the left side straight rail(29), the front left drive wheel (11) and the rear left driven wheel (13) drive the rail vehicle (1)to run straight ahead along the left side straight rail(29), when the rail vehicle(1) needs to turn into the station, to merge, to divert, or to urgently deviate from the left side straight rail(29) due to malfunctions, the entire right side equipment platform (17) moves downward to contact the right side turning rail(28) under the action of the lifting device for right side equipment platform (18), and at the same time the front right drive wheel (12) is started to power the rail vehicle (1), when the rail vehicle(1) gets to the turn section along the straight section of the right side turning rail(28), the top face level thereof gradually rises above that of the left side straight rail(29), and the entire rail vehicle power platform(27) is lifted with the rising level of the right side turning rail (28) so that the left side equipment platform(16) deviates from the left side straight rail(29), the rail vehicle(1) enters into the turn section on the right side turning rail(28) and turns along the curve to deviate from the left side straight rail(29) thereby realizing the turning of the rail vehicle(1), on the contrary, when the turn section is merged into the straight section, the level of the right side turning rail(28) gradually decreases, and the distance between right side turning rail (28) and left side straight rail (29) are gradually closer, when the straight section on the right side turning rail (28)is arrived, the left side equipment platform (16)contacts the left side straight rail(29), the front left drive wheel(11) on the left side equipment platform(16) is started and the front right drive wheel(12) on the right side equipment platform(17) is closed, under the action of the lifting device for right side equipment platform(18), the right side equipment platform(17) is lifted and deviated from the right side turning rail(28), and the rail vehicle enters into the state of running straight;

Both outer sides of the front left drive wheel (11) and the front right drive wheel (12) are provided with a brake component (15), and the lifting device for right side equipment platform (18) adopts mechanical, electromagnetic or hydraulic mode as the drive power.

The rail vehicle power platform(27) connects the rail vehicle compartment (4)through two compartment booms (20)on the front and rear, both two compartment booms(20) on the front and rear are provided with an eccentric support wheel (19), and the roll surfaces of eccentric support wheels on the front and rear compartment booms(20) are respectively in contact with the left and right sides of the bottom of the track(8) to resist the eccentric moment generated between the compartment booms(20) and the two sides of track(8). The two compartment booms (20) on the front and rear are adopted could effectively resist the torque generated by the braking of rail vehicle and increase the riding comfort, and if the single boom is adopted, the rail vehicle power system and control system would be simple and reliable, but the compartment would swing so largely at the accelerating, decelerating and braking of the rail vehicle that affects the riding comfort. And inside of the compartment boom (20) is provided a steel spring shock absorber or an air spring shock absorber which could absorb most of kinetic energy at the accelerating, decelerating and braking of the rail vehicle, thereby increasing the stability and comfort of compartment during the running.

The rail vehicle traffic network control system comprises a central control computer system, an on-board computer control system, a rail signal identification device, and a stop station computer control system, the central control computer system comprises a large central control computer and an auxiliary system thereof, the central control computer collects reservation and destination information of each rail vehicle (1), stop station information, and malfunction information of the track(8) and the rail vehicle (1) for data computing, and implements automatic control over the overall scheduling, operation line design and emergency disposal of malfunctions for the rail vehicle(1), the on-board computer control system comprises an on-board computer, a rail vehicle signal transmitting and receiving device(30), a computer controlled compartment latch(6) and data lines, the on-board computer stores the control procedures for the rail vehicle(1) in various states, when obtaining the target information set by the user on the computer controlled compartment latch (6), the on-board computer uploads the target information to the central control computer, the central control computer calculates the optimal operation line of the rail vehicle (1) and sends the optimal operation line of rail vehicle back to the on-board computer, the on-board computer calculates and processes the signal data collected by the signal transmitting and receiving device (30) to obtain the operation command of the rail vehicle (1), and the on-board computer controls the rail vehicle (1) to accelerate, decelerate and brake by adjusting the input current and voltage of the rail vehicle power platform (27), opening and closing the brake components (15), and enables the rail vehicle(1) to make a turn, a merging or a shunting by starting the lifting device for right side equipment platform (18).

The stop station control system comprises station control computers and a stop station track monitoring system, and the station control computers connected to the central control computer to receive relevant instructions. And each stop station is provided with a stop station control center responsible for controlling the arrival of the rail vehicle at the stop station, passenger getting on and off, departure, maintenance and management of rail vehicle.

The rail signal identification device is arranged at a position for the rail vehicle to make a turn, a merging, a shunting or stop at the stop station and the rail vehicle starts the set operational procedure by scanning and identifying the signal. The rail and the truss are provided with a deformation and stress monitoring device. And all the control and monitoring systems transmit the data through data lines or wireless network.

The rail vehicle compartment system comprises a rail vehicle compartment(4), a seat(9), a foldable worktop (10) and a door(5), the rail vehicle compartment(4) is connected with the rail vehicle power platform(27) through two compartment booms(20) on the front and rear, and inside the rail vehicle compartment(4) is provided a computer controlled compartment latch(6), a compartment video monitoring device, an air condition, lightings, a rail vehicle weight limit device, network, a radio equipment, an emergency calling device and a manual control button. The rail vehicle compartment (4) comprising a base plate, a steel frame structure, a maintenance plate, glass windows, a seat (9) and a door (5), has a height of the car is 1.2m - 1.5 m, a width of 1.0m ~ 1.5 m, and a length of 1.5m ~2m. The rail vehicle is available in two models, one is for single passenger, and the other is for double passengers, with a certain space for storing personal belongings. The door (5) to be opened and closed is controlled by a computer controlled compartment latch (6). The computer controlled compartment latch (6) is a data control computer installed outside the compartment, connected to the on-board computer and with the functions like identification, goal setting, collecting fee, opening and closing the door(5). By means of the computer controlled compartment latch (6), the passenger finishes the functions of identification, destination setting and automatically paying the fee, after then the door (5) automatically opens for passenger to enter into the compartment(4) and have a seat. On the front top of compartment (4) is provided a monitoring system to record the condition of internal compartment and the images on the monitoring system are synchronized to the data of the central monitoring center. The rail vehicle is provided with an air conditioning system to offer suitable environment temperature in the rail vehicle compartment (4). The rail vehicle provided with a lighting system enables the passenger to control brightness of the light. At the connection of the compartment boom (20) and the compartment is provided an automatic metrological control system for compartment loading. The total weight of the compartment and its load is controlled within a certain rage of 200kg to 300kg, and when the weight range is exceeded, the system automatically alarms and restricts the start. The weight limit device could effectively guarantee the maximum weight of a single compartment, effectively control the load range of horizontal truss, and maximize the transport capacity of track(8) under the premise of ensuring system safety. While running, the rail vehicle (1) could provide wireless network service and radio service so that the passenger could work and enjoy entertainment in the compartment. The rail vehicle traffic system adopts full automatic control so that the passenger couldn't control over those like running speed and direction of the rail vehicle (1), and when the system is abnormal, the passenger could contact the central control center through an emergency call. When the emergency call is started by a passenger, the central control center displays all the information of the rail vehicle which the passenger takes, communicates with the passenger through the video phone, and takes timely measures to deal with the situation. And when the passenger changes the destination temporarily, he could start the manual control button, select the nearest exit and reset the route.

The rail vehicle power supply system comprises transformer substations arranged along the rail, power transmission lines, a rail vehicle internal power supply system, and a contact wire network of the rail internal power supply(22), the rail vehicle inner power supply system comprises a power receiving contact (23), a rail vehicle distribution box (24), a battery emergency power supply (21), a power platform power supply line, a compartment power supply line, and a weak current system, along the track(8)is arranged transfer substations, each transfer substation is supplied by uninterruptible power from no less than two city power circuits, the transmission line is arranged along the inside of the horizontal support truss (2) to supply power for the power supply contact wire network (22), the internal power supply system of the rail vehicle (1) connects the power supply through the power receiving contact (23) and supplies power for battery emergency power supply (21), rail vehicle power platform (27), rail vehicle compartment (4), and weak current system through the distribution box (24), and the battery emergency power supply (21) is installed on the left side equipment platform (16) of the rail vehicle power platform (27).

The stop station system comprises a hardstand area, a stop station track, a drop-off platform, a pick-up platform, a rail vehicle maintenance platform and a stop station control center, the hardstand area comprises vacant lot arranged on both sides of the rail line, a basement, and an inner space of a large space building, the stop station track comprises a right side turning rail(28) and one or more left side straight rail(29), the right side turning rail(28) drawn from the turning of the track(8) within the track system, gradually decreases in the height till lower than the bottom of the rail vehicle (1) and just higher than the ground of the stop station, the right side turning rail(28) in stop station curves along the outside of the hardstand area to form an outwardly protruding arc and gradually rises in height after departing from the station to merge into the track(8)within the track system, a left side straight rail(29) of the stop station is arranged inside of the arc, a parallel segment (31) connected with the right side turning rail (28) at both ends of the left side straight rail (29) is provided for rail vehicle (1) to merge into the left side straight rail (29) from the right side turning rail(28) when entering into the station, and to shunt from left side straight rail (29) onto the right side turning rail(28) when departing from the station, the left side straight rail (29) of the stop station is used for the rail vehicle (1) to pick up and drop off passengers, the entrance thereof is set as the drop-off platform, the exit thereof is set as the pick-up platform, and the arc top of the right side turning rail (28) of the stop station is set as the maintenance platform of rail vehicle (1).

The stop station system could be divided into a manned and an unattended stop station or an open and an indoor stop station.

The working principle of the present invention, the personal hanging type double-rail and double-power automatic control light rail traffic system will be described in details as follows:

Vehicle reservation: In order to realize reasonable vehicle deployment, a user could reserve a vehicle one day or several hours in advance by logging into the vehicle scheduling website through a mobile phone or a computer according to own needs. The central control computer collects the user's reservation information for overall calculation, and arranges the vehicle to wait at the reserved time and address of the user. The central control computer could calculate the cost according to the length of the user's appointment time, and arrange the priority ride. And those who fail to use the vehicle or break the appointment at the agreed time would be surcharged for taking or imposed a certain amount of money for punishment.

Route setting and payment: The user takes the reserved rail vehicle (1) at the agreed place and time. While arriving, the rail vehicle (1) identifies the passenger through scanning a mobile phone or IC card, and opens the computer controlled compartment latch (6). And as to set the target station, the computer controlled compartment latch (6) is adopted to be inputted the station digital encoding, character name or phonetic name, then to accordingly display the name and fee of target station on the screen thereof for user to confirm, and to open the door after deducting the fee.

Board and start operation: The rail vehicle is available in two models, one is for one single passenger, and the other is for double passengers. Inside the vehicle is provided a certain space for storing luggage and personal belongings. When the passenger with luggage boards the vehicle, the total weight thereof is weighed by the load weight limit device. If the total weight is greater than the rated weight, the alarm alerts and the vehicle doesn't start. When the total weight is within the normal limits, the rail vehicle(1) automatically closes the door and the on-board computer automatically starts the operation, then the front left drive wheel (11) on the rail vehicle power platform (27) is started, the rail vehicle runs along the left side straight rail (29) ahead and starts the turn procedure at the connection with the right side turning rail (28), after completing the turn procedure, the rail vehicle(1) pulls out of the stop station along the right side turning rail(28). And the broadcast inside the compartment will have voice prompts for destination, trip distance, time and matters needing attention.

Make a merging: When the rail vehicle (1) reaches the left side straight rail (29) along the right side turning rail (28), the rail vehicle signal transmitting and receiving device (30) passes the rail signal device to scan the signal, and the on-board computer receives the signal to start the merging procedure: firstly the front left drive wheel (11) and the lifting device for right side equipment platform(18) on rail vehicle power platform (27) is started, then the right side equipment platform(17) runs upwards, the front left drive wheel(11) and rear left driven wheel(13) contact the left side straight rail(29) so that the rail vehicle is driven to run straight, then the front right drive wheel(12) and rear right driven wheel(14) stop running, the right side equipment platform(17) is lifted to deviate from the right side turning rail(28), and the rail vehicle(1) driven by the front left drive wheel(11) runs straight along the left side straight rail(2) ahead.

Run Straight: When running straight, the rail vehicle (1) driven by the front left drive wheel (11) runs on the left side straight rail (29), the speed thereof could be set within 40 to 80km/h, the spacing could be controlled within 10m to 20m, and the spacing between the rail vehicles could be automatically controlled by the distance measuring equipment installed on the front of the rail vehicle. The acceleration and deceleration of the rail vehicle could be operated through increasing or decreasing the motor current or voltage of the drive wheel. And for emergency brake, the brake components could be started.

When a running straight vehicle encounters another merging vehicle from the turning rail, the rail vehicle (1) adopts acceleration or deceleration to yield. the track(8) is provided with a signal device at the merging point, the appropriate point of the straight rail is provided with a signal receiving and transmitting device of merging signal, when the vehicle passes the merging signal device, the vehicle passing signal is transmitted to the signal receiving and transmitting device of merging signal, and when the running straight rail vehicle passes and obtains the signal that a rail vehicle is merging into the rail, the signal is calculated by the on-board computer thereof to determine whether to accelerate or decelerate so as to yield to the rail vehicle which is merging into the rail.

Make a turn: The rail vehicle signal transmitting and receiving device(30) scans the signal transmitted by the rail signal identification device installed at the turning, and if the signal is computed and determined by the on-board computer to be the set turning, the turn procedure is started as follows: the rail vehicle power platform(27) starts the lifting device for right side equipment platform(18), the right side equipment platform(17) runs downwards, then the front right drive wheel(12) and rear right driven wheel(14) contacts the right side turning rail(28) so that the front right drive wheel(12) is started to run along the right side turning rail(28) ahead, as the right side turning rail(28) is gradually lifted higher than the left side straight rail(29), the entire rail vehicle power platform(27) is lifted so that the left side equipment platform(16) deviates from the left side straight rail(29) and the front left drive wheel(11) stops running, then the turn section on the right side turning rail(28) is gradually away from the left side straight rail(29), and the rail vehicle(1) turns along the right side turning rail(28) thereby deviating from the left side straight rail(29).

Make a shunting: On a busy road is provided more than two parallel lines. The rail vehicle(1) running on a track B which is parallel to a track A and a track C, could shunt from the track B onto the track A on the left or onto the track C on the right through a shunting device, the shunting device is a right side turning rail, and the right side turning rail, manufactured into a curve shape, could be connected to the right side turning rail of the track A by bypassing the track B to the left or be connected to the right side turning rail of the track C by bypassing the track C to the right. When the rail vehicle(1) passes the shunting point, the signal transmitting and receiving device(30) scans the rail signal device, and if the set shunting point is computed and determined by the on-board computer, the turn procedure is started as follows: the rail vehicle(1) firstly starts the turn procedure, and the rail vehicle(1) turns along the right side turning rail(28) to deviate from the track B, then bypasses the track B to the left along the shunting device, and starts the merging procedure when getting to the right of the track A and merges into the track A; or then bypasses the track C to the right along the shunting device, and starts the merging procedure when getting to the right of the track C and merges into the track C.

Pull into: The turning on the track (8) for pulling into station is provided with a rail signal device. When the rail vehicle (1) passes by, the signal transmitting and receiving device (30) thereon scans the rail signal device. If the signal is computed and determined to be the turning by the on-board computer or the passenger starts the manual control button, the turn procedure is started. When turning into the station for a maintenance, the rail vehicle ((1) could runs along the right side turning rail (28) directly to the maintenance area; when pulling into the station for dropping off or picking up the passenger, the rail vehicle starts a merging procedure at the parallel segment of the left side turning rail (29) and the right side straight rail (28), then the rail vehicle (1) enters into the left side straight rail(29) of the stop station, and stops at the dropping-off area to automatically open the door for passenger to get off, after then the rail vehicle(1) automatically closes the door and stops at the picking-up area for passenger to get on. The rail vehicle(1) doesn't start running until the passenger gets on, and the turn procedure thereof is started at the parallel segment of the left side turning rail (29) and the right side straight rail (28) so that the rail vehicle pulls out of the station along the right side turning rail(28) and merges into the main rail.

Measures for malfunction emergency disposal are as follows:
1.Make an emergency turn into station because of mechanical breakdown of the rail vehicle (1): the rail vehicle (1) is designed to adopt a power system of four independent drive wheels, two are installed on the left of rail vehicle and two are on the right of rail vehicle. When one front left drive wheel (11) is broken down, the other still drives the rail vehicle to run at a normal speed; when both two drive wheels are broken down, the rail vehicle automatically starts turn procedure so that the right side equipment platform (16) moves downwards to be started, and the rail vehicle is driven to make a turn and deviate from the straight running rail. And on the right are also provided with two right drive wheels, when one drive wheel is broken down, the other wheel still drives the rail vehicle to run at a normal speed and deviate from the main rail so that the fault rail vehicle doesn't affect the running of other straight running rail vehicles.
2. Start the emergency power supply and turn into station because of power supply failure: the rail vehicle (1) is provided with a storage battery (21) to be an emergency power supply, when the external power supply of the rail vehicle (1) fails, the battery emergency power supply (21) is started instantly and the turn procedure is started to stop at the nearest station.
3. Rail vehicle operating obstacle monitoring and distance control device: on the front of the rail vehicle is provided a laser scanning and distance measuring system which could automatically scan the obstacles ahead and rail vehicle(1) ahead in the running process. And when the distance from the obstacles ahead or the rail vehicle (1) ahead is shorter than the safe distance, the deceleration procedure is automatically started to keep safe distance with the rail vehicle(1) ahead or to slow down and stop before the obstacles.
4. Rail malfunction monitoring and emergency turn: The components like the track(8), the horizontal support truss (2) and vertical support column (3) are provided with a stress and deformation monitoring device to timely monitor the stress and deformation of those components like the track, truss and support column, caused by external force or their selves. And when the stress and deformation exceed safe range, the central control computer forces the nearby rail vehicle (1) to make an emergency turn and avoid the dangerous lines.
5. Rail vehicle malfunction inspection and maintenance: When broken down, the rail vehicle (1) makes a turn into the nearest station and stops at the maintenance area for repair.

Referred to the attached figures, the detailed descriptions are as follows:

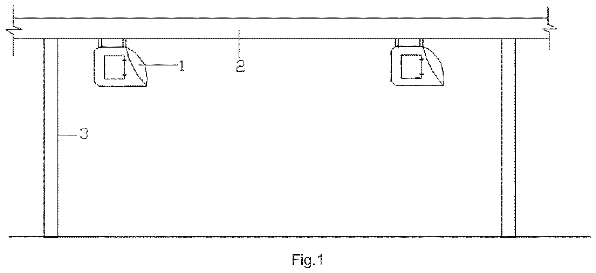

Fig.1 shows the interrelations among the rail vehicle, truss and column. The rail where the rail vehicle (1) runs is installed inside of the cavity of the horizontal support truss (2) and the vertical support column (3) supports the horizontal support truss (2). Due to the rail vehicle adopts light weight design, the horizontal support truss (2) is less loaded so that the span of the horizontal support truss (2) could be over 100m, the section height of truss could be within 1.5m to 2.5m, the height of column could be within 5m to 15m, and the section height of column could be 0.8m to 1.5 m.

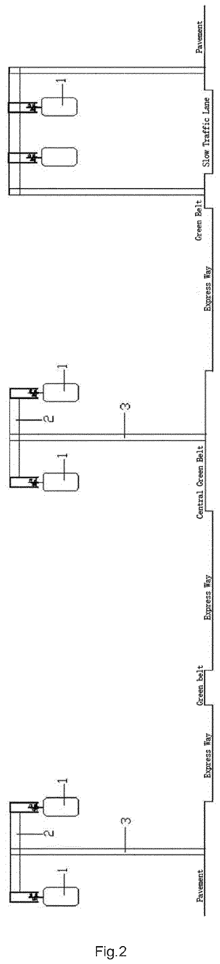

Fig. 2 shows the layout of rail vehicle on urban roads. The layout of rail vehicle (1) on a normal urban road could be designed in three basic forms. The first one is that the horizontal support truss (2) and the vertical support column (3) are arranged on the pavement and the rail vehicle runs above the pavement; the second one is the horizontal support truss (2) and the vertical support column (3) are arranged on the central green belt and the rail vehicle (1) runs above the central green belt; and the third one is gantry support frame and the rail vehicle (1) runs above the slow traffic lane.

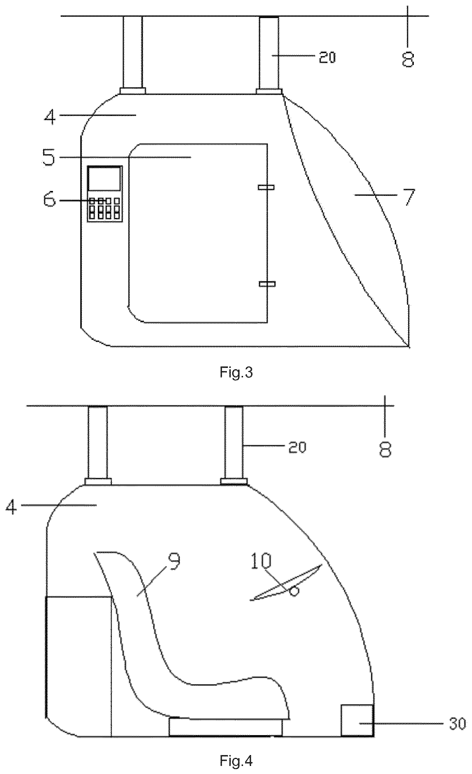

Fig. 3 and Fig.4 show the appearance and internal structure of rail vehicle. The Fig.3 shows the appearance of rail vehicle. The outer structure comprises the rail vehicle compartment(4), the front windshield(7), the door(5), two compartment booms on the front and rear(20) and the computer controlled compartment latch(6), and the connection between the compartment boom(20) and the rail vehicle compartment(4) is provided with the weight limit device. The compartment boom(20) is connected to the top of the rail vehicle compartment(4) through a turn plate, when the rail vehicle (1) makes a small radius turn, a rotation will be generated between the compartment boom (20) and the rail vehicle compartment (4). The Fig.4 shows internal structure of rail vehicle. The internal structure comprises the seat (9), the foldable worktop (10) and the appropriate positions in rail vehicle compartment are provided with the a compartment video monitoring device, air conditions, lightings, network, radio equipment, emergency calling devices and manual control buttons. On the front of compartment is provided a signal transmitting and receiving device (30) and rail vehicle distance measuring equipment and at the rear of compartment is provided a luggage storing place.

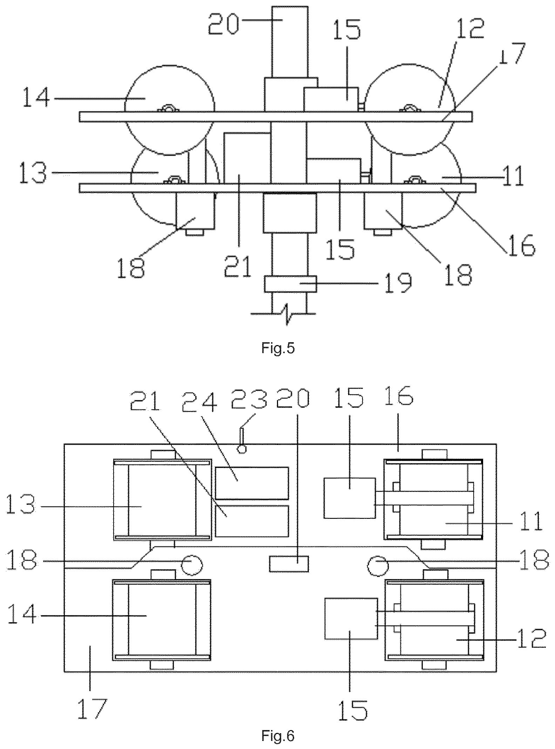

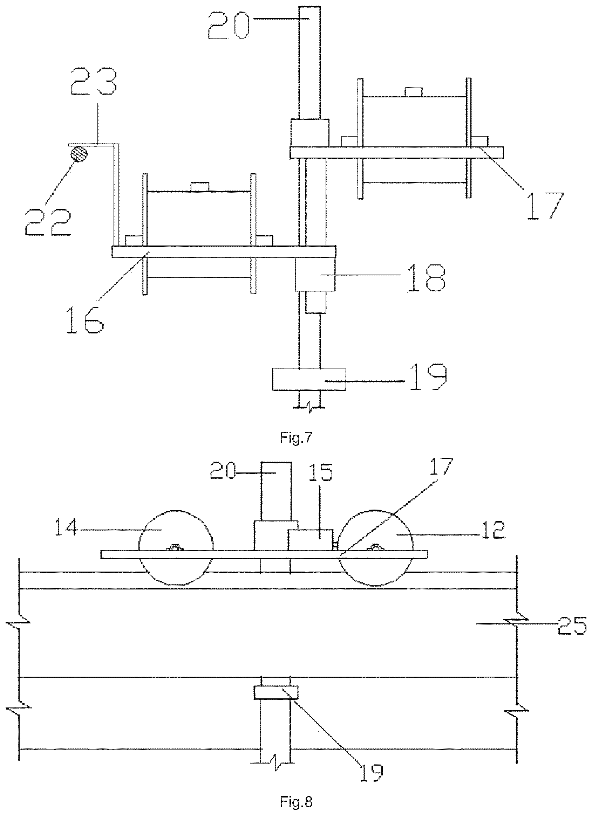

Fig. 5 -7 show the rail vehicle power system. The Fig. 5 is the plan view of the rail vehicle power system (27), the Fig.6 is the side level of the rail vehicle power system, and the Fig.7 is the front and rear level of the rail vehicle power system (27). The rail vehicle power system (27) comprises two equipment platforms of metal structure, a left side equipment platform (16) and a right side equipment platform (17). On the front and rear of the left side equipment platform(16) are respectively provided a front left drive wheel (11) and a rear left driven wheel (13), and on the front left drive wheel (11) is provided a brake component (15). On the left side equipment platform (16) is also provided equipment like a battery emergency power supply (21), a distribution box (24), a power receiving contact (23) and an on-board computer. On the front and the rear of the right side equipment platform (17) are respectively provided a front right drive wheel (12) and a rear right driven wheel (14), and on the front right drive wheel(12) is provided a brake component (15), the right side equipment platform (17) reciprocates up and down relative to the left side equipment platform (16) through the lifting device for right side equipment platform (18) and the rail vehicle power platform connects the compartment(4) through the compartment boom(20).

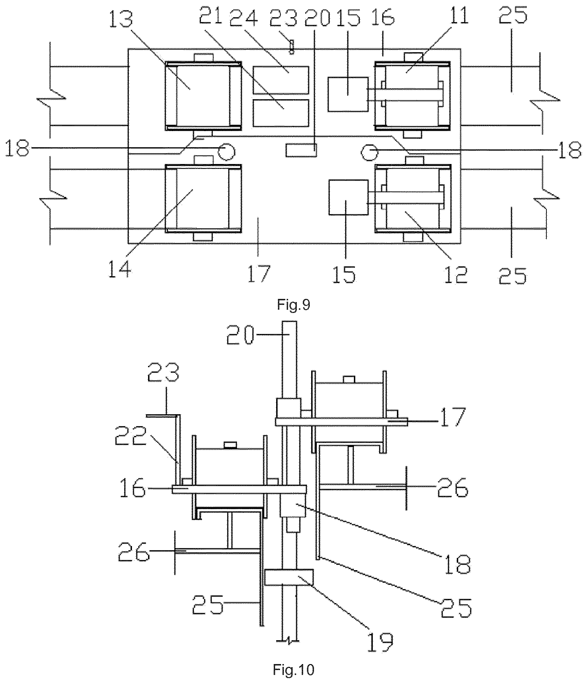

Fig. 8 -10 show the interrelation between the track (8) and the rail vehicle power platform (27). The track (8) comprises a left side straight rail (29) and a right side turning rail (28). The rail on each side comprises an inverted L-shaped rail steel plate (25) and a rail support member (26). The rail support member (26) is welded firmly to the rail steel plate at one end and the other end thereof is welded firmly to the horizontal support truss (2). The position where the compartment boom is above the bottom of the inverted L-shaped track(8) is provided with an eccentric support wheel(19), the eccentric support wheel(19) is in contact with the side edge of left side and right side rails to resist the eccentric moment generated among the compartment boom (20) and rails on two sides. The left side equipment platform (16) is installed above the left side straight rail (29), the right side equipment platform (17) is installed above the right side turning rail (28), and the top face level of left side straight rail (29) is lower than that of the straight section on the right side turning rail (28). When transiting to the turn section from the straight section, the right side turning rail (28) gradually rises in top face level along the running direction of the ail vehicle and the top height difference between the turning and the left side straight rail (29) enables the left side equipment platform (16) of the rail vehicle to deviate from the left side straight rail (29), the right side turning rail (28) curves at the highest point with gradually increasing distance from the left side straight rail (29), and the right side turning rail (28) diverts to the stop station so that the rail vehicle could pull in and stop in the station, or connects to another right side turning rail(28)which is on an intersected or parallel rail line so that the rail vehicle(1) could make a turn, a merging or a shunting.

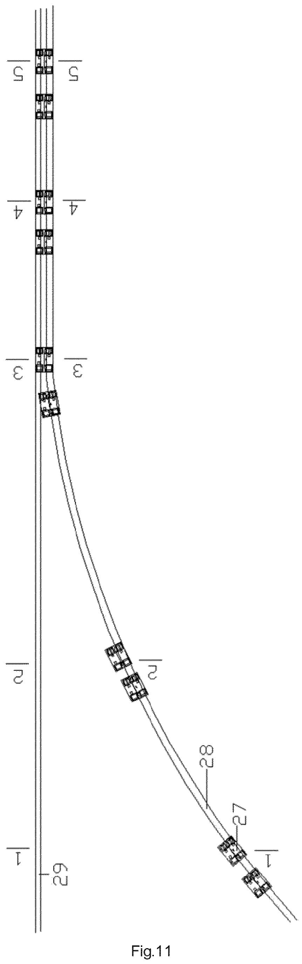

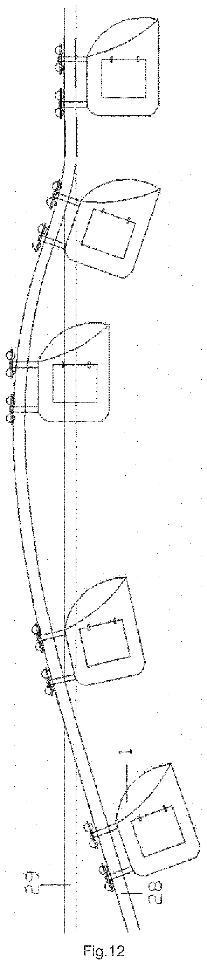

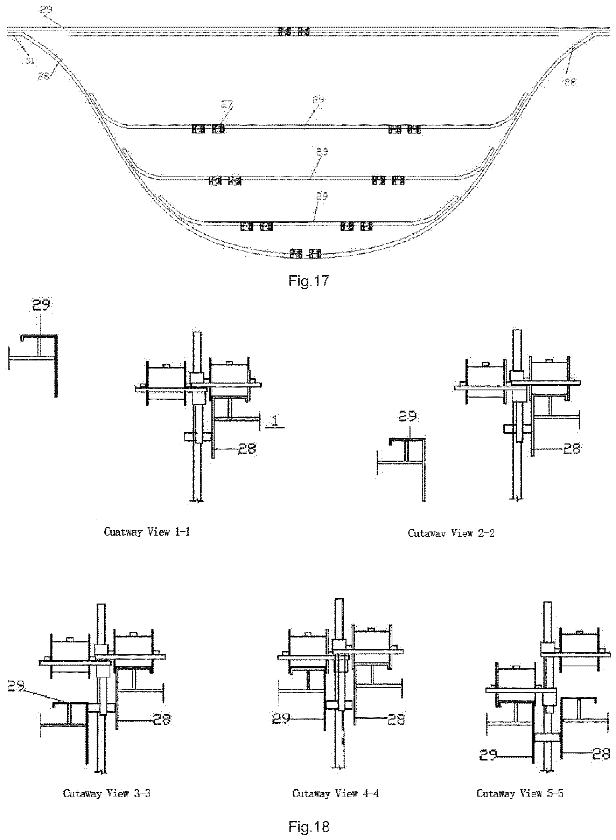

The Fig.11, Fig.12 and Fig.18 show the rail vehicle makes a merging and runs straight. When the rail vehicle (1) reaches the left side straight rail (29) along the right side turning rail (28), the signal transmitting and receiving device (30) bypasses the rail signal device to scan the signal, and the on-board computer receives the signal to start the merging procedure: Firstly the front left drive wheel(11) of the left side equipment platform(16) on the rail vehicle power platform(27) and the lifting device for right side equipment platform(18) are started, the right side equipment platform(17) runs upwards, the front left drive wheel(11) and rear left driven wheel(13) contact the left side straight rail(29) so that the rail vehicle is driven to run straight, then the front right drive wheel(12) and rear right driven wheel(14) stop running, the right side equipment platform(17) is lifted to deviate from the right side turning rail(28), and the rail vehicle(1) driven by the front left drive wheel(11) runs straight along the left side straight rail(2) ahead, thereby completing the merging procedure. In Fig.18, the cutaway views 1-1, 2-2 and 3-3 show the process that the rail vehicle (1) gradually approaches the left side straight rail (29) from the right side turning rail (28); the cutaway view 4-4 shows the left side equipment platform(16) contacts the left side straight rail(29) to start the front left drive wheel(11) on the left side equipment platform(16); and the cutaway view 5-5 shows the lifting device for right side equipment platform(18) is started so that the right side equipment platform(17) is lifted to deviate from the right side turning rail(28) and the rail vehicle(1) is driven by the left side equipment platform to run straight on the left side straight rail(29).

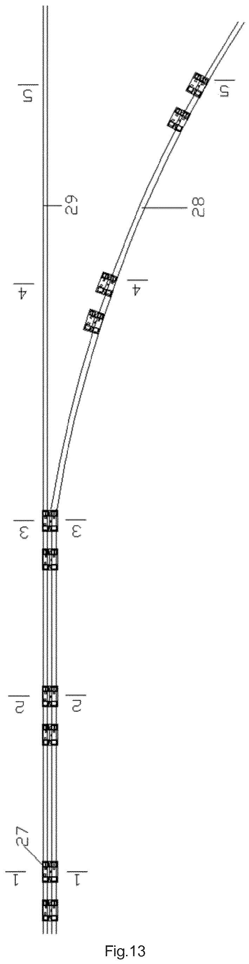

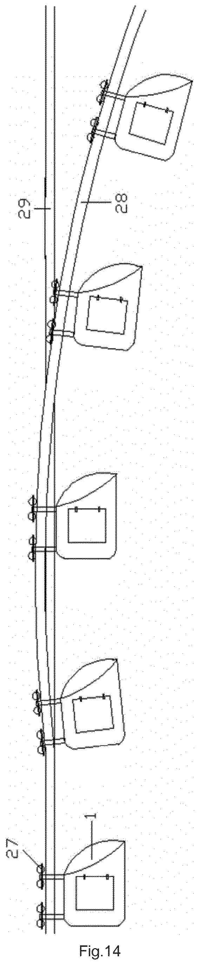

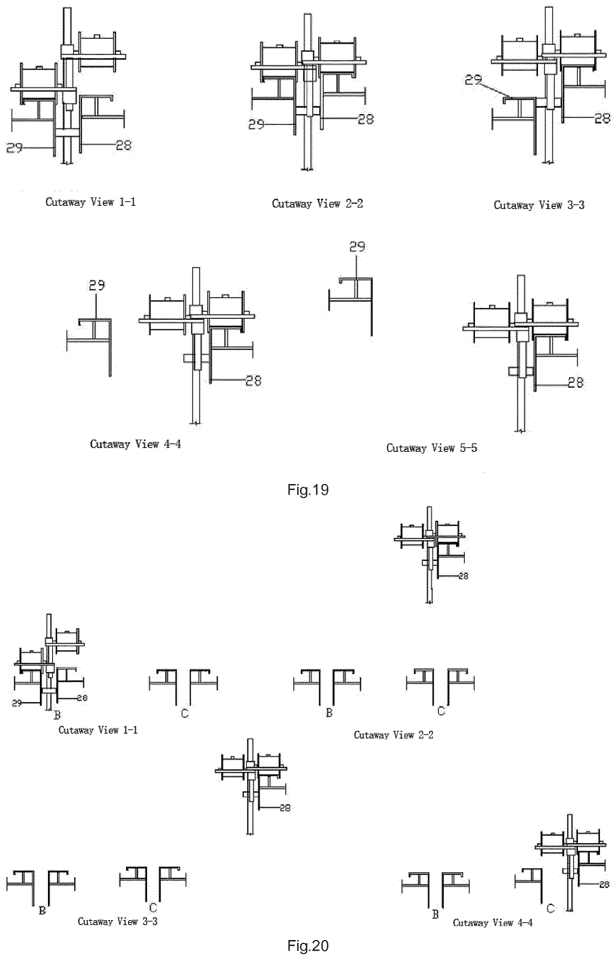

The Fig.13, Fig.14 and Fig.19 show the rail vehicle makes a turn. The signal transmitting and receiving device (30) on rail vehicle scans the signal transmitted by the rail signal identification device installed at the turning, and the turn procedure is started as follows when the signal is determined to be the set turning by the on-board computer: The lifting device for right side equipment platform (18) is started by the rail vehicle power platform (27) firstly, the right side equipment platform (17) runs upwards, the front right drive wheel(12) and the rear right driven wheel(14) contact the right side turning rail(28) so that the front right drive wheel(12) is started to run along the right side rail ahead, then with the right side turning rail(28) gradually being lifted above the left side straight rail(29), the rail vehicle power platform(27) is lifted so that the left side equipment platform(16) is driven to deviate from the left side rail, and the front left drive wheel(11) stops running. The right side turning rail (28) is gradually away from the left side straight rail (29) after the curve, and the rail vehicle(1) makes a turn along the right side turning rail(28) to deviate from the left side straight rail(29), thereby completing the turn procedure. In Fig.19, the cutaway view 1-1 shows the straight running state of the rail vehicle power platform (27), the left side equipment platform (16) attaches to the left side straight rail (29), the right side equipment platform (17) is lifted by the lifting device for right side equipment platform (18) and there is a certain gap from the right side turning rail (28); the cutaway view 2-2 shows the entire right side equipment platform (17) is dropped by the lifting device for right side equipment platform (18), and the right side equipment platform (17) contacts the right side turning rail(28) to start the front right drive wheel(12) on the right side equipment platform(17); The cutaway view 3-3 shows that with the rail vehicle power platform running ahead, the top face level of the right side turning rail(28) is gradually lifted above the left side straight rail(29), the entire right side equipment platform(17) with the rail vehicle power platform(27) is lifted so that the left side equipment platform(16) is lifted to deviate from left side straight rail(29) and the front left drive wheel(11) stops running; and the cutaway view 4-4 and the cutaway view 5-5 show that the right side equipment platform(17) runs on the right side turning rail(28), and the distance from the right side turning rail(28) to the left side straight rail(29) gradually becomes larger so that the rail vehicle(1) deviates from the straight rail and enters into the turning rail.

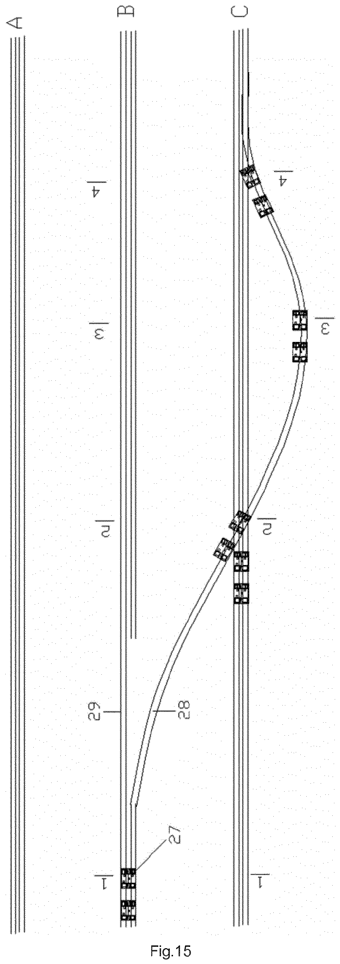

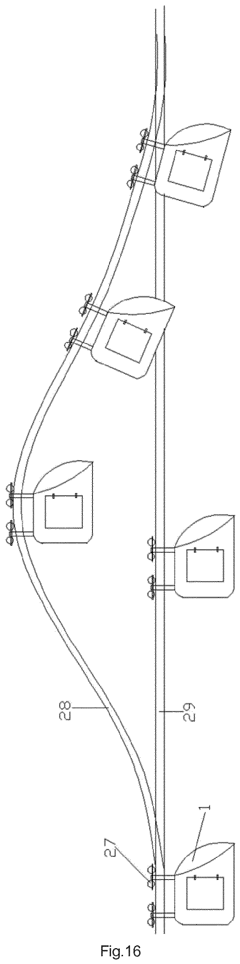

Fig.15, Fig.16 and Fig.20 show the rail vehicle makes a shunting. On the busy road is provided more than two parallel lines. The rail vehicle(1) running on a track B which is parallel to a track A and a C, could shunt from the track B onto the track A on the left or onto the track C on the right through a shunting device, the shunting device is a right side turning rail, and the right side turning rail, manufactured into a curve shape, could be connected to the right side turning rail of the track A by bypassing the track B to the left or be connected to the right side turning rail of the track C by bypassing the track C to the right. When the rail vehicle(1) passes the shunting point, the signal transmitting and receiving device(30) scans the rail signal device, and if the set shunting point is computed and determined by the on-board computer, the turn procedure is started as follows: the turn procedure is firstly started, and the rail vehicle(1) turns along the right side turning rail(28) to deviate from the track B, then bypasses the track B to the left along the shunting device, starts the merging procedure when getting to the right of the track A and merges into the track A; or bypasses the track C to the right along the shunting device, starts the merging procedure when getting the right of the track C and merges into the track C, thereby completing the shunting procedure. In Fig.20, the cutaway view 1-1 shows the rail vehicle(1) runs straight on the track B before making a shunting, and the left side equipment platform(16) runs straight on the left side straight rail(29); the cutaway view 2-2 and the cutaway view 3-3 show the rail vehicle starts the turn procedure, the right side equipment platform(17) runs on the right side turning rail(28) , and the shunting device guides the rail vehicle to bypass the track C along the curve; and the cutaway view 4-4 shows the merging procedure is started and the rail vehicle makes a merging into the track C.

The Fig.17 is the schematic diagram showing the rail vehicle pulls into the stop station. The turning on the straight rail for pulling into station is provided with a rail signal device. When passing by, the signal transmitting and receiving device (30) of the rail vehicle scans the turn signal of the rail signal device. If the turn signal is determined by the on-board computer or the passenger starts the manual control button, the turn procedure is started. When turning into the station for a maintenance, the rail vehicle ((1) could run along the right side turning rail (28) directly to the maintenance area; when pulling into the station for dropping off or picking up passengers, the rail vehicle starts a merging procedure at the parallel segment of the left side turning rail (29) and the right side straight rail (28), then the rail vehicle (1) enters into the left side straight rail(29) of the stop station, and stops at the dropping-off area to automatically open the door for passenger to get off, after then, the rail vehicle(1) automatically closes the door and stops at the picking-up area for passenger to get on. And the rail vehicle (1) doesn't start until the passenger gets on, and the turn procedure thereof is started at the parallel segment of the left side turning rail (29) and the right side straight rail (28) so that the rail vehicle pulls out of the station along the right side turning rail (28) and makes a merging into the main rail.

## Claims

1. A personal hanging type double-rail and double-power automatic control light rail traffic system, comprising a track system, a rail vehicle power system, a rail vehicle traffic network control system, a rail vehicle compartment system, a rail vehicle power supply system, and a rail vehicle stop station system, whereby: the track system comprises a track support system and a track(8), the track support system comprises a vertical support column(3) and a horizontal support truss(2), a rail vehicle(1) runs along the track(8), the track(8) comprises a left side straight rail(29) and a right side turning rail(28), the track(8) is installed in an inner cavity of the horizontal support truss (2), the left side straight rail (29), installed on the left side of the cavity, is a mainline rail arranged continuously; the right side turning rail (28), installed on the right side of the cavity, comprises a straight section and a turn section, the straight section thereof is set to be parallel to the left side straight rail (29) with spacing reserved, the top face level of the straight section thereof is higher than that of the left side straight rail (29), the top face level thereof gradually rises while transiting to the turn section from the straight section, the top height difference between the turning and the left side straight rail (29) enables the left side equipment platform (16) of the rail vehicle (1)to deviate from the left side straight rail (29), the right side turning rail (28) curves at the highest point with gradually increasing distance from the left side straight rail (29), and the right side turning rail (28) diverts to the stop station so that the rail vehicle could pull in and stop in the station, or connects to another right side turning rail(28)which is on an intersected or parallel rail line so that the rail vehicle(1) could make a turn, a merging or a shunting; the rail vehicle power system comprises a compartment boom (20), a rail vehicle power platform (27) and an eccentric support wheel (19), the rail vehicle power platform(27) comprises a left side equipment platform(16) and a right side equipment platform(17), the left side equipment platform (16) is provided with a front left drive wheel (11) and a rear left driven wheel (13), the right side equipment platform (17) is provided with a front right drive wheel (12), a rear right driven wheel (14) and a lifting device for right side equipment platform (18), the lower end of the compartment boom (20) is provided with an eccentric support wheel (19), and the roll surface of the eccentric support wheel (19) is in contact with the bottom side of the track(8); the compartment boom(20) is flexible connected to the top of the rail vehicle compartment(4) through a turn plate, when the rail vehicle (1) makes a small radius turn, a rotation will be generated between the compartment boom (20) and the rail vehicle compartment (4), the left side equipment platform (16) is installed above the left side straight rail (29), the right side equipment platform (17) is installed above the right side turning rail (28), and the right side equipment platform (17) reciprocates up and down relative to the left side equipment platform (16) through the lifting device for right side equipment platform (18); when the rail vehicle(1) runs straight, due to the left side equipment platform (16) is above the left side straight rail(29), the front left drive wheel (11) and the rear left driven wheel (13) drive the rail vehicle (1)to run straight ahead along the left side straight rail(29), when the rail vehicle(1) needs to turn into the station, to merge, to divert, or to urgently deviate from the left side straight rail(29) due to malfunctions, the entire right side equipment platform (17) moves downward to contact the right side turning rail(28) under the action of the lifting device for right side equipment platform (18), and at the same time the front right drive wheel (12) is started to power the rail vehicle (1), when the rail vehicle(1) gets to the turn section along the straight section of the right side turning rail(28), the top face level thereof gradually rises above that of the left side straight rail(29), and the entire rail vehicle power platform(27) is lifted with the rising level of the right side turning rail (28) so that the left side equipment platform(16) deviates from the left side straight rail(29), then the rail vehicle(1) enters into the turn section on the right side turning rail(28) and turns along the curve to deviate from the left side straight rail(29) thereby realizing the turning of the rail vehicle(1), on the contrary, when the turn section is merged into the straight section, the level of the right side turning rail(28) gradually decreases, and the distance between right side turning rail (28) and left side straight rail (29) are gradually closer, when the straight section on the right side turning rail (28)is arrived, the left side equipment platform (16)contacts the left side straight rail(29), the front left drive wheel(11) on the left side equipment platform(16) is started and the front right drive wheel(12) on the right side equipment platform(17) is closed, under the action of the lifting device for right side equipment platform(18), the right side equipment platform(17) is lifted and deviated from the right side turning rail(28), and the rail vehicle enters into the state of running straight; the rail vehicle traffic network control system comprises a central control computer system, an on-board computer control system, a rail signal identification device, and a stop station computer control system, the central control computer system comprises a large central control computer and an auxiliary system thereof, the central control computer collects reservation and destination information of each rail vehicle (1), stop station information, and malfunction information of the track(8) and the rail vehicle (1) for data computing, and implements automatic control over the overall scheduling, operation line design and emergency disposal of malfunctions for the rail vehicle(1), the on-board computer control system comprises an on-board computer, a rail vehicle signal transmitting and receiving device(30), a computer controlled compartment latch(6) and data lines, the on-board computer stores the control procedures for the rail vehicle(1) in various states, when obtaining the target information set by the user on the computer controlled compartment latch (6), the on-board computer uploads the target information to the central control computer, the central control computer calculates the optimal operation line of the rail vehicle (1) and sends the optimal operation line of rail vehicle back to the on-board computer, the on-board computer calculates and processes the signal data collected by the signal transmitting and receiving device (30) to obtain the operation command of the rail vehicle (1), and the on-board computer controls the rail vehicle (1) to accelerate, decelerate and brake by adjusting the input current and voltage of the rail vehicle power platform (27), opening and closing brake components (15), and enables the rail vehicle(1) to make a turn, a merging or a shunting by starting the lifting device for right side equipment platform (18).

2. The rail traffic system in accordance to claim 1, **characterized in that** the rail vehicle compartment system comprises a rail vehicle compartment(4), a seat(9), a foldable worktop (10) and a door(5), the rail vehicle compartment(4) is connected with the rail vehicle power platform (27) through two compartment booms(20) on the front and rear, and inside the rail vehicle compartment(4) is provided a computer controlled compartment latch(6), a compartment video monitoring device, an air condition, lightings, a rail vehicle weight limit device, network, a radio equipment, an emergency calling device and a manual control button.

3. The rail traffic system in accordance to claim 1, **characterized in that** the rail vehicle power supply system comprises transformer substations arranged along the way, power transmission lines, a rail vehicle internal power supply system, and a contact wire network of the rail internal power supply(22), the rail vehicle inner power supply system comprises a power receiving contact (23), a rail vehicle distribution box (24), a battery emergency power supply (21), a power platform power supply line, a compartment power supply line, and a weak current system, along the track(8)is arranged transfer substations, each transfer substation is supplied by uninterruptible power from no less than two city power circuits, the transmission line is arranged along the inside of the horizontal support truss (2) to supply power for the power supply contact wire network (22), the internal power supply system of the rail vehicle (1) connects the power supply through the power receiving contact (23) and supplies power for battery emergency power supply (21), rail vehicle power platform (27), rail vehicle compartment (4), and weak current system through the distribution box (24), and the battery emergency power supply (21) is installed on the left side equipment platform (16) of the rail vehicle power platform (27).

4. The rail traffic system in accordance to claim 1, **characterized in that** both outer sides of the front left drive wheel (11) and the front right drive wheel (12) are provided with a brake component (15), and the lifting device for right side equipment platform (18) adopts mechanical, electromagnetic or hydraulic mode as the drive power.

5. The rail traffic system in accordance to claim 1, **characterized in that** the track (8) adopts an inverted L-shaped structure, and the track (8) comprises an inverted L-shaped rail steel plate (25) and a rail support member (26).

6. The rail traffic system in accordance to claim 1, **characterized in that** the rail vehicle power platform(27) connects the rail vehicle compartment (4) through two compartment booms (20)on the front and rear, both two compartment booms(20) on the front and rear are provided with an eccentric support wheel (19), and the roll surfaces of eccentric support wheels on the front and rear compartment booms(20) are respectively in contact with the left and right sides of the bottom of the track(8) to resist the eccentric moment generated between the compartment booms(20) and the two sides of track(8).

7. The rail traffic system in accordance to claim 1, **characterized in that** the track(8) is provided with a signal device at the merging point, the appropriate point of the straight rail is provided with a signal receiving and transmitting device of merging signal, when the vehicle passes the merging signal device, the vehicle passing signal is transmitted to the signal receiving and transmitting device of merging signal, and when the running straight rail vehicle passes and obtains the signal that a rail vehicle is merging into the rail, the signal is calculated by the on-board computer thereof to determine whether to accelerate or decelerate so as to yield to the rail vehicle which is merging into the rail.

8. The rail traffic system in accordance to claim 1, **characterized in that** the rail vehicle(1) running on a track B which is parallel to a track A and a track C, could shunt from the track B onto the track A on the left or onto the track C on the right through a shunting device, the shunting device is a right side turning rail, and the right side turning rail, manufactured into a curve shape, could be connected to the right side turning rail of the track A by bypassing the track B to the left or be connected to the right side turning rail of the track C by bypassing the track C to the right.

9. The rail traffic system in accordance to claim 1, **characterized in that** the stop station system comprises a hardstand area, a stop station track, a drop-off platform, a pick-up platform, a rail vehicle maintenance platform and a stop station control center, the hardstand area comprises the vacant lot arranged on both sides of the rail line, a basement, and an inner space of a large space building, the stop station track comprises a right side turning rail(28) and at least a left side straight rail(29), the right side turning rail(28) drawn from the turning of the track(8) within the track system, gradually decreases in the height till lower than the bottom of the rail vehicle (1) and just higher than the ground of the stop station, the right side turning rail(28) in stop station curves along the outside of the hardstand area to form an outwardly protruding arc and gradually rises in height after departing from the station to merge into the track(8)within the track system, a left side straight rail(29) of the stop station is arranged inside of the arc, a parallel segment (31) connected with the right side turning rail (28) at both ends of the left side straight rail (29) is provided for rail vehicle (1) to merge into the left side straight rail (29) from the right side turning rail(28) when entering the station, and to shunt from left side straight rail (29) onto the right side turning rail(28) when departing from the station, the left side straight rail (29) of the stop station is used for the rail vehicle (1) to pick up and drop off passengers, the entrance thereof is set as the drop-off platform, the exit thereof is set as the pick-up platform, and the arc top of the right side turning rail (28) of the stop station is set as the maintenance platform of rail vehicle (1).

## Patentansprüche

1. - Zweischieniges hängendes Schienen-Nahverkehrssystem zur Personenbeförderung mit redundanter Stromversorgung und automatischer Steuerung, umfassend ein Fahrbahnsystem, ein Schienenfahrzeug-Energiesystem, ein Schienenfahrzeug-Verkehrsnetzwerksteuersystem, ein Schienenfahrzeug-Kabinensystem, ein Schienenfahrzeug-Stromversorgungssystem und ein Schienenfahrzeug-Haltestationssystem, wobei:
das Fahrbahnsystem ein Fahrbahnträgersystem und eine Fahrbahn (8) umfasst, das Fahrbahnträgersystem eine vertikale Stützsäule (3) und ein horizontales Tragwerk (2) umfasst, ein Schienenfahrzeug (1) die Fahrbahn (8) entlang fährt, die Fahrbahn (8) eine linksseitige gerade Scheine (29) und eine rechtsseitige kurvige Schiene (28) umfasst, die Fahrbahn (8) in einem Innenhohlraum des horizontalen Tragwerks (2) installiert ist, die linksseitige gerade Schiene (29), die auf der linken Seite des Hohlraums installiert ist, eine Hauptstreckenschiene ist, die durchgehend angeordnet ist; die rechtsseitige kurvige Schiene (28), die auf der rechten Seite des Hohlraums installiert ist, einen geraden Abschnitt und einen kurvigen Abschnitt umfasst, der gerade Abschnitt davon so festgelegt ist, dass er unter Einhaltung eines Abstands parallel zur linksseitigen geraden Schiene (29) ist, das Oberseitenniveau des geraden Abschnitts davon höher als das der linksseitigen geraden Schiene (29) ist, das Oberseitenniveau davon während des Übergangs vom geraden Abschnitt zum kurvigen Abschnitt schrittweise ansteigt, der obere Höhenunterschied zwischen der kurvigen und der linksseitigen geraden Schiene (29) es der linksseitigen Einrichtungsplattform (16) des Schienenfahrzeugs (1) ermöglicht, sich von der linksseitigen geraden Schiene (29) zu entfernen, die rechtsseitige kurvige Schiene (28) sich am höchsten Punkt mit einem schrittweise zunehmenden Abstand von der linksseitigen geraden Schiene (29) krümmt, und die rechtsseitige kurvige Schiene (28) zur Haltstation abzweigt, so dass das Schienenfahrzeug in die Haltestation einfahren und in der Station anhalten könnte, oder sich mit einer anderen rechtsseitigen kurvigen Schiene (28) verbindet, die auf einem kreuzenden oder parallelen Schienenstrang ist, so dass das Schienenfahrzeug (1) ein Abbiegen, ein Einfädeln oder ein Rangieren durchführen könnte; das Schienenfahrzeug-Energiesystem einen Kabinenarm (20), eine Schienenfahrzeug-Energieplattform (27) und ein exzentrisches Stützrad (19) umfasst, die Schienenfahrzeug-Energieplattform (27) eine linksseitige Einrichtungsplattform (16) und eine rechtsseitige Einrichtungsplattform (17) umfasst, die linksseitige Einrichtungsplattform (16) mit einem vorderen linken Antriebsrad (11) und einem hinteren linken Antriebsrad (13) versehen ist, die rechtsseitige Einrichtungsplattform (17) mit einem vorderen rechten Antriebsrad (12), einem hinteren rechten Antriebsrad (14) und einer Hebevorrichtung für die rechtsseitige Einrichtungsplattform (18) versehen ist, das untere Ende des Kabinenarms (20) mit einem exzentrischen Stützrad (19) versehen ist, und die Rollfläche des exzentrischen Stützrads (19) mit der Unterseite der Fahrbahn (8) in Kontakt ist; der Kabinenarm (20) durch eine Drehplatte mit dem oberen Ende der Schienenfahrzeugkabine (4) flexibel verbunden ist, wenn das Schienenfahrzeug (1) einen kleinen Wendekreis macht, eine Drehung zwischen dem Kabinenarm (20) und der Schienenfahrzeugkabine (4) herbeigeführt wird, die linksseitige Einrichtungsplattform (16) über der linksseitigen gerade Schiene (29) installiert ist, die rechtsseitige Einrichtungsplattform (17) über der rechtsseitigen kurvigen Schiene (28) installiert ist, und die rechtsseitige Einrichtungsplattform (17) sich in Bezug auf die linksseitige Einrichtungsplattform (16) durch die Hebevorrichtung für die rechtsseitige Einrichtungsplattform (18) auf- und abbewegt; wenn das Schienenfahrzeug (1) gerade fährt, das vordere linke Antriebsrad (11) und das hintere linke Antriebsrad (13) das Schienenfahrzeug (1) aufgrund dessen, dass die linksseitige Einrichtungsplattform (16) über der linksseitigen geraden Schiene (29) ist, so antreiben, dass es entlang der linksseitigen geraden Schiene (29) geradeaus fährt, wenn das Schienenfahrzeug (1) in die Station einfahren, einfädeln, abzweigen oder aufgrund von Störungen sich dringend von der linksseitigen geraden Schiene (29) entfernen muss, sich die gesamte rechtsseitige Einrichtungsplattform (17) unter Einwirkung der Hebevorrichtung für die rechtsseitige Einrichtungsplattform (18) nach unten bewegt, um mit der rechtsseitigen kurvigen Schiene (28) in Kontakt zu treten, und gleichzeitig das vordere rechte Antriebsrad (12) gestartet wird, um das Schienenfahrzeug (1) anzutreiben, wenn das Schienenfahrzeug (1) entlang des geraden Abschnitts der rechtsseitigen kurvigen Schiene (28) zum kurvigen Abschnitt gelangt, das Oberseitenniveau davon über das der linksseitigen geraden Schiene (29) schrittweise ansteigt und die gesamte Schienenfahrzeug-Energieplattform (27) mit dem ansteigenden Niveau der rechtsseitigen kurvigen Schiene (28) so angehoben wird, dass die linksseitige Einrichtungsplattform (16) sich von der linksseitigen geraden Schiene (29) entfernt, woraufhin das Schienenfahrzeug (1) in den kurvigen Abschnitt auf der rechtsseitigen kurvigen Schiene (28) eintritt und entlang der Kurve abbiegt, um sich von der linksseitigen geraden Schiene (29) zu entfernen, um dadurch das Abbiegen des Schienenfahrzeugs (1) durchzuführen, wenn dagegen der kurvige Abschnitt in den geraden Abschnitt übergeht, das Niveau der rechtsseitigen kurvigen Schiene (28) schrittweise absinkt, und der Abstand zwischen der rechtsseitigen kurvigen Schiene (28) und der linksseitigen geraden Schiene (29) schrittweise kleiner wird, wenn der gerade Abschnitt auf der rechtsseitigen kurvigen Schiene (28) erreicht wird, die linksseitige Einrichtungsplattform (16) mit der linksseitigen geraden Schiene (29) in Kontakt tritt, das vordere linke Antriebsrad (11) auf der linksseitigen Einrichtungsplattform (16) gestartet wird, und das vordere rechte Antriebsrad (12) auf der rechtsseitigen Einrichtungsplattform (17) unter Einwirkung der Hebevorrichtung für die rechtsseitige Einrichtungsplattform (18) geschlossen wird, die rechtsseitige Einrichtungsplattform (17) angehoben und von der rechtsseitigen kurvigen Schiene (28) entfernt wird, und das Fahrzeug in den Zustand des Geradefahrens eintritt; das Schienenfahrzeug-Verkehrsnetzwerksteuersystem ein zentrales Steuercomputersystem, ein Bordcomputersteuersystem, eine Schienensignalidentifizierungsvorrichtung, und ein Haltestations-Computersteuersystem umfasst, das zentrale Steuercomputersystem einen großen zentralen Steuercomputer und ein Hilfssystem davon umfasst, der zentrale Steuercomputer Reservierungs- und Zielinformationen jedes Schienenfahrzeugs (1), Haltestationsinformationen und Störungsinformationen der Fahrbahn (8) und des Schienenfahrzeugs (1) zur Datenverarbeitung sammelt und automatische Steuerung über Gesamtplanung, Betriebsleitungsdesign und Notbeseitigung von Störungen für das Schienenfahrzeug (1) implementiert, das Bordcomputersteuersystem einen Bordcomputer, eine Schienenfahrzeugsignalsende- und -empfangsvorrichtung (30), einen computergesteuerten Kabinenverschluss (6) und Datenleitungen umfasst, der Bordcomputer die Steuerprozeduren für das Schienenfahrzeug (1) in verschiedenen Zuständen speichert, wenn die vom Benutzer festgelegten Zielinformationen über den computergesteuerten Kabinenverschluss (6) erhalten werden, der Bordcomputer die Zielinformationen auf den zentralen Steuercomputer hochlädt, der zentrale Steuercomputer die optimale Betriebsleitung des Schienenfahrzeugs (1) berechnet und die optimale Betriebsleitung des Schienenfahrzeugs an den Bordcomputer zurücksendet,der Bordcomputer die durch die Signalsende- und -empfangsvorrichtung (30) gesammelten Signaldaten berechnet und verarbeitet, um den Betriebsbefehl des Schienenfahrzeugs (1) zu erhalten, und der Bordcomputer das Schienenfahrzeug (1) zum Beschleunigen, Entschleunigen und Bremsen durch Einstellen des Eingangsstroms und der Eingangsspannung der Schienenfahrzeug-Energieplattform (27) und Öffnen und Schließen von Bremskomponenten (15) steuert und das Schienenfahrzeug (1) durch Starten der Hebevorrichtung für die rechtsseitige Einrichtungsplattform (18) zum Durchführen eines Abbiegens, eines Einfädelns oder eines Rangierens befähigt.

2. - Schienenverkehrssystem nach Anspruch 1, **dadurch gekennzeichnet, dass** das Schienenfahrzeug-Kabinensystem ein Schienenfahrzeugkabine (4), einen Sitz (9), eine zusammenklappbare Arbeitsplatte (10) und eine Tür (5) umfasst, die Schienenfahrzeugkabine (4) durch zwei Kabinenarme (20) auf der Vorderseite und der Hinterseite mit der Schienenfahrzeug-Energieplattform (27) verbunden ist, und innerhalb der Schienenfahrzeugkabine (4) ein computergesteuerter Kabinenverschluss (6), eine Kabinen-Videoüberwachungsvorrichtung, eine Klimaanlage, Beleuchtungen, eine Schienenfahrzeug-Gewichtsbegrenzungsvorrichtung, ein Netzwerk, eine Funkeinrichtung, ein Notrufvorrichtung und eine manuelle Steuertaste vorgesehen sind.

3. - Schienenverkehrssystem nach Anspruch 1, **dadurch gekennzeichnet, dass** das Schienenfahrzeug-Stromversorgungssystem Transformator-Unterstationen, die entlang des Weges angeordnet sind, Hochspannungsleitungen, ein schienenfahrzeuginternes Stromversorgungssystem und ein Fahrdrahtnetzwerk der schieneninternen Stromversorgung (22) umfasst, das schienenfahrzeuginterne Stromversorgungssystem einen Stromaufnahmekontakt (23), eine Schienenfahrzeug-Verteilerkasten (24), eine Batterienotstromversorgung (21), eine Energieplattform-Stromversorgungsleitung, eine Kabinen-Stromversorgungsleitung und ein Schwachstromsystem umfasst, Übertragungs-Unterstationen entlang der Fahrbahn (8) angeordnet sind, jede Übertragungs-Unterstation durch ununterbrochenen Strom von nicht weniger als zwei Stadtstromkreisen versorgt wird, die Übertragungsleitung entlang der Innenseite des horizontalen Tragwerks (2) angeordnet ist, um das Stromversorgungs-Fahrdrahtnetzwerk (22) mit Strom zu versorgen, das interne Stromversorgungssystem des Schienenfahrzeugs (1) die Stromversorgung durch den Stromaufnahmekontakt (23) verbindet und die Batterienotstromversorgung (21), die Schienenfahrzeug-Energieplattform (27), die Schienenfahrzeugkabine (4) und das Schwachstromsystem durch den Verteilerkasten (24) mit Strom versorgt, und die Batterienotstromversorgung (21) auf der linksseitigen Einrichtungsplattform (16) der Schienenfahrzeug-Energieplattform (27) installiert ist.

4. - Schienenverkehrssystem nach Anspruch 1, **dadurch gekennzeichnet, dass** beide Außenseiten des vorderen linken Antriebsrads (11) und des vorderen rechten Antriebsrads (12) mit einer Bremskomponente (15) versehen sind, und die Hebevorrichtung für die rechtsseitige Einrichtungsplattform (18) einen mechanischen, elektromagnetischen oder hydraulischen Modus als Antriebsenergie annimmt.

5. - Schienenverkehrssystem nach Anspruch 1, **dadurch gekennzeichnet, dass** die Fahrbahn (8) eine Strukturform eines umgekehrten Ls annimmt, und die Fahrbahn (8) eine Schienenstahlplatte (25) in Form eines umgekehrten Ls und ein Schienenstützelement (26) umfasst.

6. - Schienenverkehrssystem nach Anspruch 1, **dadurch gekennzeichnet, dass** die Schienenfahrzeug-Energieplattform (27) mit der Schienenfahrzeugkabine (4) durch zwei Kabinenarme (20) auf der Vorderseite und der Hinterseite verbunden ist, beide der Kabinenarme (20) auf der Vorderseite und der Hinterseite mit einem exzentrischen Stützrad (19) versehen sind, und die Rollflächen von exzentrischen Stützrädern auf dem vorderen und dem hinteren Kabinenarm (20) jeweils mit der linken und der rechten Seite der Unterseite der Fahrbahn (8) in Kontakt sind, um dem exzentrischen Moment zu widerstehen, das zwischen den Kabinenarmen (20) und den beiden Seiten der Fahrbahn (8) erzeugt wird.

7. - Schienenverkehrssystem nach Anspruch 1, **dadurch gekennzeichnet, dass** die Fahrbahn (8) mit einer Signalvorrichtung am Einfädelungspunkt versehen ist, der entsprechende Punkt der geraden Schiene mit einer Signalempfangs- und -sendevorrichtung für das Einfädelungssignal vorgesehen ist, wenn das Fahrzeug die Einfädelungssignalvorrichtung passiert, das Fahrzeugpassiersignal an die Signalempfangs- und-sendevorrichtung für das Einfädelungssignal gesendet wird, und wenn das auf der geraden Schiene fahrende Fahrzeug vorbeikommt und das Signal erhält, dass ein Schienenfahrzeug sich in die Schiene einfädelt, das Signal durch den Bordcomputer davon berechnet wird, um zu bestimmen, ob es beschleunigen oder entschleunigen soll, um dem Schienenfahrzeug, das sich in die Schiene einfädelt, Vorfahrt zu gewähren.

8. - Schienenverkehrssystem nach Anspruch 1, **dadurch gekennzeichnet, dass** das Schienenfahrzeug (1), das auf einer Fahrbahn B fährt, die parallel zu einer Fahrbahn A und einer Fahrbahn C ist, durch eine Rangiervorrichtung von der Fahrbahn B auf die Fahrbahn A auf der linken Seite oder auf die Fahrbahn C auf der rechten Seite rangieren könnte, die Rangiervorrichtung eine rechtsseitige kurvige Schiene ist, und die rechtsseitige kurvige Schiene, die in einer Kurvenform ausgeführt ist, durch Umleiten der Fahrbahn B nach links mit der rechtsseitigen kurvigen Schiene der Fahrbahn A verbunden werden könnte oder durch Umleiten der Fahrbahn C nach rechts mit der rechtsseitigen kurvigen Schiene der Fahrbahn C verbunden werden könnte.

9. - Schienenverkehrssystem nach Anspruch 1, **dadurch gekennzeichnet, dass** das Haltestationssystem einen Abstellbereich, eine Haltestationsfahrbahn, eine Ausstiegsplattform, eine Aufnahmeplattform, eine Schienenfahrzeug-Wartungsplattform und eine Haltestationssteuerzentrale umfasst, der Abstellbereich die Baulücke, die auf beiden Seiten der Schienenstrangs angeordnet ist, ein Untergeschoss und einen Innenraum eines großflächigen Gebäudes umfasst, die Haltestationsfahrbahn eine rechtsseitige kurvige Schiene (28) und mindestens eine linksseitige gerade Schiene (29) umfasst, die rechtsseitige kurvige Schiene (28), die sich von der Wende der Fahrbahn (8) innerhalb des Fahrbahnsystems erstreckt, in der Höhe schrittweise bis unter die Unterseite des Schienenfahrzeugs (1) und unmittelbar über den Boden der Haltestation abnimmt, die rechtsseitige kurvige Schiene (28) in der Haltestation sich entlang der Außenseite des Abstellbereichs krümmt, um einen nach außen vorstehenden Bogen zu bilden, und nach ihrer Entfernung von der Station schrittweise in der Höhe ansteigt, um sich in die Fahrbahn (8) innerhalb des Fahrbahnsystems einzufädeln, eine linksseitige gerade Schiene (29) der Haltestation innerhalb des Bogens angeordnet ist, ein paralleles Segment (31), das mit der rechtsseitigen kurvigen Schiene (28) an beiden Enden der linksseitigen geraden Schiene (29) verbunden ist, vorgesehen ist, damit das Schienenfahrzeug (1) sich von der rechtsseitigen kurvigen Schiene (28) in die linksseitige gerade Schiene (29) einfädelt, wenn es in die Station einfährt, und von der linksseitigen geraden Schiene (29) auf die rechtsseitige kurvige Schiene (28) rangiert, wenn es aus der Station ausfährt, die linksseitige gerade Schiene (29) der Haltestation verwendet wird, damit das Schienenfahrzeug (1) Passagiere aufnimmt und aussteigen lässt, der Eingang davon als die Ausstiegsplattform festgelegt ist, der Ausgang davon als die Aufnahmeplattform festgelegt ist, und die Bogenspitze der rechtsseitigen kurvigen Schiene (28) der Haltestation als die Wartungsplattform des Schienenfahrzeugs (1) festgelegt ist.

## Revendications

1. - Système de circulation léger sur rail à commande automatique à double rail et double puissance de type suspendu, personnel, comprenant un système de voie, un système de puissance de véhicule ferroviaire, un système de commande de réseau de circulation de véhicule ferroviaire, un système de compartiment de véhicule ferroviaire, un système d'alimentation électrique de véhicule ferroviaire et un système de station d'arrêt de véhicule ferroviaire, dans lequel : le système de voie comprend un système de support de voie et une voie (8), le système de support de voie comprend une colonne de support verticale (3) et une ferme de support horizontale (2), un véhicule ferroviaire (1) circule le long de la voie (8), la voie (8) comprend un rail rectiligne côté gauche (29) et un rail de virage côté droit (28), la voie (8) est installée dans une cavité intérieure de la ferme de support horizontale (2), le rail rectiligne côté gauche (29), installé sur le côté gauche de la cavité, est un rail de ligne principale disposé en continu ; le rail de virage côté droit (28), installé sur le côté droit de la cavité, comprend une section rectiligne et une section de virage, sa section rectiligne est posée pour être parallèle au rail rectiligne côté gauche (29) avec un espacement réservé, le niveau de face supérieure de sa section rectiligne est plus haut que celui du rail rectiligne côté gauche (29), son niveau de face supérieure s'élève progressivement tout en passant de la section rectiligne à la section de virage, la différence de hauteur de partie supérieure entre le virage et le rail rectiligne côté gauche (29) permet à la plate-forme d'équipement côté gauche (16) du véhicule ferroviaire (1) de dévier du rail rectiligne côté gauche (29), le rail de virage côté droit (28) s'incurve au point le plus haut avec une distance progressivement croissante à partir du rail rectiligne côté gauche (29), et le rail de virage côté droit (28) s'écarte vers la station d'arrêt de telle sorte que le véhicule ferroviaire peut s'arrêter dans la station, ou se raccorde à un autre rail de virage côté droit (28) qui se trouve sur une ligne ferroviaire croisée ou parallèle de telle sorte que le véhicule ferroviaire (1) peut faire un virage, une insertion ou un aiguillage ; le système de puissance de véhicule ferroviaire comprend un bras de compartiment (20), une plate-forme de puissance de véhicule ferroviaire (27) et une roue de support excentrique (19), la plate-forme de puissance de véhicule ferroviaire (27) comprend une plate-forme d'équipement côté gauche (16) et une plate-forme d'équipement côté droit (17), la plate-forme d'équipement côté gauche (16) comporte une roue motrice avant gauche (11) et une roue entraînée arrière gauche (13), la plate-forme d'équipement côté droit (17) comporte une roue motrice avant droite (12), une roue entraînée arrière droite (14) et un dispositif de levage pour plate-forme d'équipement côté droit (18), l'extrémité inférieure du bras de compartiment (20) comporte une roue de support excentrique (19), et la surface de roulement de la roue de support excentrique (19) est en contact avec le côté inférieur de la voie (8) ; le bras de compartiment (20) est reliée de manière flexible à la partie supérieure du compartiment de véhicule ferroviaire (4) par l'intermédiaire d'une plaque tournante, lorsque le véhicule ferroviaire (1) effectue un virage à petit rayon, une rotation sera générée entre le bras de compartiment (20) et le compartiment de véhicule ferroviaire (4), la plate-forme d'équipement côté gauche (16) est installée au-dessus du rail rectiligne côté gauche (29), la plate-forme d'équipement côté droit (17) est installée au-dessus du rail de virage côté droit (28), et la plate-forme d'équipement côté droit (17) effectue un mouvement de va-et-vient vers le haut et vers le bas par rapport à la plate-forme d'équipement côté gauche (16) par l'intermédiaire du dispositif de levage de la plate-forme d'équipement côté droit (18) ; lorsque le véhicule ferroviaire (1) se déplace en ligne droite, du fait que la plate-forme d'équipement côté gauche (16) se trouve au-dessus du rail rectiligne côté gauche (29), la roue motrice avant gauche (11) et la roue entraînée arrière gauche (13) entraînent le véhicule ferroviaire (1) pour qu'il se déplace en ligne droite le long du rail rectiligne côté gauche (29), lorsque le véhicule ferroviaire (1) doit tourner dans la station, s'insérer, dévier ou s'écarter d'urgence du rail rectiligne côté gauche (29) en raison de dysfonctionnements, l'ensemble de la plate-forme d'équipement côté droit (17) se déplace vers le bas pour entrer en contact avec le rail de virage côté droit (28) sous l'action du dispositif de levage pour plate-forme d'équipement côté droit (18), et, en même temps, la roue motrice avant droite (12) est démarrée pour entraîner le véhicule ferroviaire (1), lorsque le véhicule ferroviaire (1) arrive à la section de virage le long de la section rectiligne du rail de virage côté droit (28), son niveau de face supérieure s'élève progressivement au-dessus de celui du rail rectiligne côté gauche (29), et l'ensemble de la plate-forme de puissance de véhicule ferroviaire (27) est soulevé avec le niveau croissant du rail de virage côté droit (28) de telle sorte que la plate-forme d'équipement côté gauche (16) s'écarte du rail rectiligne côté gauche (29), puis le véhicule ferroviaire (1) entre dans la section de virage sur le rail de virage côté droit (28) et tourne le long de la courbe pour s'écarter du rail rectiligne côté gauche (29), réalisant ainsi le virage du véhicule ferroviaire (1), au contraire lorsque la section de virage rejoint la section rectiligne, le niveau du rail de virage côté droit (28) diminue progressivement, et la distance entre le rail de virage côté droit (28) et le rail linéaire côté gauche (29) se rapproche progressivement, lorsque l'on arrive à la section rectiligne sur le rail de virage côté droit (28), la plate-forme d'équipement côté gauche (16) entre en contact avec le rail rectiligne côté gauche (29), la roue motrice avant gauche (11) de la plate-forme d'équipement côté gauche (16) est démarrée et la roue motrice avant droite (12) sur la plate-forme d'équipement côté droit (17) est fermée, sous l'action du dispositif de levage pour plate-forme d'équipement côté droit (18) la plate-forme d'équipement côté droit (17) est soulevée et écartée du rail de virage côté droit (28) et le véhicule ferroviaire entre dans l'état de marche en ligne droite ; le système de commande de réseau de circulation de véhicule ferroviaire comprend un système d'ordinateur de commande central, un système de commande par ordinateur embarqué, un dispositif d'identification de signal ferroviaire et un système de commande par ordinateur de station d'arrêt, le système d'ordinateur de commande central comprend un grand ordinateur de commande central et un système auxiliaire de celui-ci, l'ordinateur de commande central collecte des informations de réservation et de destination de chaque véhicule ferroviaire (1), des informations de station d'arrêt et des informations de dysfonctionnement de la voie (8) et du véhicule ferroviaire (1) pour calcul de données, et met en œuvre une commande automatique sur la planification globale, la conception de ligne d'opération et d'élimination d'urgence de dysfonctionnements pour le véhicule ferroviaire (1), le système de commande par ordinateur embarqué comprend un ordinateur embarqué, un dispositif d'émission et de réception de signal de véhicule ferroviaire (30), un verrou de compartiment commandé par ordinateur (6) et des lignes de données, l'ordinateur embarqué stocke les procédures de commande pour le véhicule ferroviaire (1) dans divers états, lors de l'obtention des informations cibles définies par l'utilisateur sur le verrou de compartiment commandé par ordinateur (6), l'ordinateur embarqué télécharge les informations cibles vers l'ordinateur de commande central, l'ordinateur de commande central calcule la ligne d'opération optimale du véhicule ferroviaire (1) et renvoie la ligne d'opération optimale du véhicule ferroviaire à l'ordinateur embarqué, l'ordinateur embarqué calcule et traite les données de signal collectées par le dispositif d'émission et de réception de signal (30) pour obtenir la commande d'opération du véhicule ferroviaire (1), et l'ordinateur embarqué commande le véhicule ferroviaire (1) pour accélérer, ralentir et freiner en ajustant le courant et la tension d'entrée de la plate-forme de puissance de véhicule ferroviaire (27), en ouvrant et en fermant les composants de freinage (15), et permet au véhicule ferroviaire (1) d'effectuer un virage, une insertion ou un aiguillage en démarrant le dispositif de levage pour la plate-forme d'équipement côté droit (18).

2. - Système de circulation ferroviaire selon la revendication 1, **caractérisé par le fait que** le système de compartiment de véhicule ferroviaire comprend un compartiment de véhicule ferroviaire (4), un siège (9), un plan de travail pliable (10) et une porte (5), le compartiment de véhicule ferroviaire (4) est relié à la plate-forme de puissance de véhicule ferroviaire (27) par l'intermédiaire de deux bras de compartiment (20) à l'avant et à l'arrière, et à l'intérieur du compartiment de véhicule ferroviaire (4) sont prévus un verrou de compartiment commandé par ordinateur (6), un dispositif de surveillance vidéo de compartiment, une climatisation, des éclairages, un dispositif de limitation de poids de véhicule ferroviaire, un réseau, un équipement radio, un dispositif d'appel d'urgence et un bouton de commande manuelle.

3. - Système de circulation ferroviaire selon la revendication 1, **caractérisé par le fait que** le système d'alimentation électrique de véhicule ferroviaire comprend des sous-stations de transformation disposées le long de la voie, des lignes de transmission électrique, un système d'alimentation électrique interne de véhicule ferroviaire et un réseau de fils de contact de l'alimentation électrique interne de rail (22), le système d'alimentation électrique interne de véhicule ferroviaire comprend un contact de réception d'alimentation (23), une boîte de distribution de véhicule ferroviaire (24), une alimentation électrique de secours par batterie (21), une ligne d'alimentation électrique de plate-forme de puissance, une ligne d'alimentation électrique de compartiment et un système de courant faible, le long de la voie (8) sont disposées des sous-stations de transfert, chaque sous-station de transfert est alimentée par une alimentation sans interruption provenant d'au moins deux circuits d'alimentation urbains, la ligne de transmission est disposée le long de l'intérieur de la ferme de support horizontale (2) pour alimenter le réseau de fils de contact d'alimentation électrique (22), le système d'alimentation électrique interne du véhicule ferroviaire (1) relie l'alimentation électrique par l'intermédiaire du contact de réception d'alimentation (23) et fournit la puissance pour l'alimentation électrique de secours par batterie (21), la plate-forme de puissance de véhicule ferroviaire (27), le compartiment de véhicule ferroviaire (4) et le système de courant faible par l'intermédiaire de la boîte de distribution (24), et l'alimentation électrique de secours par batterie (21) est installée sur la plate-forme d'équipement côté gauche (16) de la plate-forme de puissance de véhicule ferroviaire (27).

4. - Système de circulation ferroviaire selon la revendication 1, **caractérisé par le fait que** les deux côtés extérieurs de la roue motrice avant gauche (11) et de la roue motrice avant droite (12) comportent un composant de freinage (15), et le dispositif de levage pour plate-forme d'équipement côté droit (18) adopte un mode mécanique, électromagnétique ou hydraulique comme puissance d'entraînement.

5. - Système de circulation ferroviaire selon la revendication 1, **caractérisé par le fait que** la voie (8) adopte une structure en forme de L inversé, et la voie (8) comprend une plaque d'acier de rail en forme de L inversé (25) et un élément de support de rail (26).

6. - Système de circulation ferroviaire selon la revendication 1, **caractérisé par le fait que** la plate-forme de puissance de véhicule ferroviaire (27) est reliée au compartiment de véhicule ferroviaire (4) par l'intermédiaire de deux bras de compartiment (20) à l'avant et à l'arrière, les deux bras de compartiment (20) à l'avant et à l'arrière comportent une roue de support excentrique (19), et les surfaces de roulement des roues de support excentriques sur les bras de compartiment avant et arrière (20) sont respectivement en contact avec les côtés gauche et droit du fond de la voie (8) pour résister au moment excentrique généré entre les bras de compartiment (20) et les deux côtés de la voie (8).

7. - Système de circulation ferroviaire selon la revendication 1, **caractérisé par le fait que** la voie (8) comporte un dispositif de signalisation au point d'insertion, le point approprié du rail rectiligne comporte un dispositif de réception et d'émission de signal d'insertion, lorsque le véhicule passe devant le dispositif de signalisation d'insertion, le signal de passage de véhicule est émis vers le dispositif de réception et d'émission de signal d'insertion et lorsque le véhicule ferroviaire en circulation passe et obtient le signal selon lequel un véhicule ferroviaire s'insère sur le rail, le signal est calculé par l'ordinateur embarqué de celui-ci pour déterminer s'il faut accélérer ou ralentir de façon à céder le passage au véhicule ferroviaire qui s'insère sur le rail.

8. - Système de circulation ferroviaire selon la revendication 1, **caractérisé par le fait que** le véhicule ferroviaire (1) circulant sur une voie B qui est parallèle à une voie A et une voie C pourrait être dévié de la voie B sur la voie A à gauche ou sur la voie C à droite par l'intermédiaire d'un dispositif d'aiguillage, le dispositif d'aiguillage est un rail de virage côté droit, et le rail de virage côté droit, fabriqué en forme de courbe, peut être relié au rail de virage côté droit de la voie A en contournant la voie B vers la gauche ou être relié au rail de virage côté droit de la voie C en contournant la voie C vers la droite.

9. - Système de circulation ferroviaire selon la revendication 1, **caractérisé par le fait que** le système de station d'arrêt comprend une zone de quai, une voie de station d'arrêt, une plate-forme de dépose, une plate-forme de ramassage, une plate-forme d'entretien de véhicule ferroviaire et un centre de commande de station d'arrêt, la zone de quai comprend le terrain inoccupé agencé des deux côtés de la ligne ferroviaire, un sous-sol, et un espace intérieur d'un grand bâtiment, la voie de station d'arrêt comprend un rail de virage côté droit (28) et au moins un rail rectiligne côté gauche (29), le rail de virage côté droit (28), tiré du virage de la voie (8) dans le système de voie, diminue progressivement en hauteur jusqu'à être plus bas que la partie inférieure du véhicule ferroviaire (1) et juste plus haut que le sol de la station d'arrêt, le rail de virage côté droit (28) dans la station d'arrêt s'incurve le long de l'extérieur de la zone de quai pour former un arc faisant saillie vers l'extérieur et augmente progressivement en hauteur après avoir quitté la station pour s'insérer sur la voie (8) dans le système de voie, un rail rectiligne côté gauche (29) de la station d'arrêt est disposé à l'intérieur de l'arc, un segment parallèle (31) relié au rail de virage côté droit (28) aux deux extrémités du rail rectiligne côté gauche (29) est prévu pour que le véhicule ferroviaire (1) s'insère sur le rail rectiligne côté gauche (29) depuis le rail de virage côté droit (28) lorsqu'il entre dans la station, et pour qu'il dévie du rail rectiligne côte gauche (29) au rail de virage côté droit (28) lorsqu'il quitte la station, le rail rectiligne côté gauche (29) de la station d'arrêt est utilisé pour que le véhicule ferroviaire (1) ramasse et dépose des passagers, l'entrée de celui-ci est définie comme étant la plate-forme de dépose, la sortie de celui-ci est définie comme étant la plate-forme de ramassage, et l'arc supérieur du rail de virage côté droit (28) de la station d'arrêt est défini comme étant la plate-forme d'entretien de véhicule ferroviaire (1).
